# EUROPÄISCHE PATENTSCHRIFT

(11) **EP 2 862 124 B1**
(45) Veröffentlichungstag und Bekanntmachung des Hinweises auf die Patenterteilung: **29.04.2020**
(21) Anmeldenummer: 13739933.3
(22) Anmeldetag: 14.06.2013
(51) Int. Cl.: G06K 9/00

(54) **VERFAHREN UND ANORDNUNG ZUR PRÜFUNG VON FINGERABDRÜCKEN AUF ECHTHEIT**
METHOD AND ARRANGEMENT FOR CHECKING FINGERPRINTS FOR AUTHENTICITY
PROCÉDÉ ET DISPOSITIF DE VÉRIFICATION DE L'AUTHENTICITÉ D'EMPREINTES DIGITALES

(30) Priorität: 14.06.2012 DE 102012011972
(43) Veröffentlichungstag der Anmeldung: 22.04.2015
(73) Patentinhaber: Technische Universität Dresden, 01069 Dresden (DE); Bundesrepublik Deutschland, vertreten durch das Bundesministerium des Innern, vertreten durch das Bundesamt für Sicherheit in der, 53175 Bonn (DE)
(72) Erfinder: MEISSNER, Sven, 09599 Freiberg (DE); KOCH, Edmund, 01309 Dresden (DE)
(74) Vertreter: Rauschenbach, Marion
(86) Internationale Anmeldenummer: PCT/DE2013/000324
(87) Internationale Veröffentlichungsnummer: WO 2013/185748

(56) Entgegenhaltungen:
- DE-A1-102004 043 876
- MEISSNER SVEN ET AL.: "Thin layer finger print fake detection by Optical Coherence Tomography", PROCEEDINGS BIOMEDIZINISCHE TECHNIK 2011, 45. DGBMT JAHRESTAGUNG, Bd. 56, Nr. s1, 1. September 2011 (2011-09-01), XP008165396, Freiburg ISSN: 0013-5585, DOI: 10.1515/BMT.2011.415
- "Chapter 9: Securing Fingerprint Systems" In: Maltoni Davide et al. (Eds.): "Handbook of Fingerprint Recognition (Second Edition)", 1. Januar 2009 (2009-01-01), Springer-Verlag London Ltd, London, XP002712671, ISBN: 978-1-84882-253-5 Seiten 371-416, Seite 388, Zeile 25 - Seite 389, Zeile 8
- CHENG Y ET AL: "ARTIFICIAL FINGERPRINT RECOGNITION BY USING OPTICAL COHERENCE TOMOGRAPHY WITH AUTOCORRELATION ANAYLSIS", APPLIED OPTICS, OPTICAL SOCIETY OF AMERICA, WASHINGTON, DC; US, Bd. 45, Nr. 36, 20. Dezember 2006 (2006-12-20), Seiten 9238-9245, XP001503402, ISSN: 0003-6935, DOI: 10.1364/AO.45.009238
- KIRILL V. LARIN ET AL: "Three-dimensional imaging of artificial fingerprint by optical coherence tomography", PROCEEDINGS OF SPIE, BIOMETRIC TECHNOLOGY FOR HUMAN IDENTIFICATION V,, Bd. 6944, 16. März 2008 (2008-03-16), Seiten 69440M-1-69440M-6, XP055084404, ISSN: 0277-786X, DOI: 10.1117/12.776643

## Beschreibung

Die Erfindung betrifft ein Verfahren und eine Anordnung zur Prüfung von Fingerabdrücken auf Echtheit.

Herkömmliche Verfahren sind in kommerziellen Fingerabdruckscannern vorhanden.

Kommerzielle Fingerabdruckscanner benutzen häufig zur Lebenderkennung das Verfahren der Pulsoxymetrie. Die Pulsoxymetrie misst den Sauerstoffgehalt des durch den Finger strömenden Blutes und die Oszillation des Blutflusses (Puls). Die Art der Lebenderkennung liefert jedoch keine verlässlichen Daten insbesondere bei kalten Fingern, verschmutzen Fingern oder stark pigmentierten Fingern.

Kommerzielle Fingerabdruckscanner benutzen für die Aufnahme des Fingerabdruckes nur ein zweidimensionales Bild der Fingeroberfläche. Da keine dreidimensionale Erfassung des unter der Fingeroberfläche unterliegenden Gewebes erfolgt, können diese Fingerabdruckscanner nicht zwischen echten Fingerabdrücken und Dünnschichtimitaten bzw. Vollfingerimitaten unterscheiden. Das ist eine Sicherheitslücke, die ein hohes Sicherheitsrisiko darstellt, welches bis zum heutigen Zeitpunkt einen Einsatz an Supermarktkassen, Geldautomaten etc. verhindert.
Imitate sind zurzeit billig und können in kurzer Zeit hergestellt werden.

Bei einer herkömmlichen optischen Kohärenztomografie können dreidimensionale Abbilder von transparenten und teilstransparenten Objekten hergestellt werden. Dabei wird Licht geringer Kohärenzlänge mit Hilfe eines Interferometers zur Entfernungsmessung streuender Materialien eingesetzt. Das Objekt wird dabei punktweise abgetastet.
Die Vorteile der optischen Kohärenztomografie gegenüber anderen herkömmlichen Abtastverfahren sind eine relativ hohe Eindringtiefe (1mm bis 3mm) in streuendes Gewebe und eine gleichzeitige hohe axiale Auflösung (0,5*µ*m bis 15*µ*m) bei hoher Messgeschwindigkeit (20 kvoxel/s bis 300 kvoxel/s).
Das Grundprinzip der optischen Kohärenztomografie basiert auf der Weißlichtinterferometrie. Das Verfahren vergleicht die Laufzeit eines optischen Signals mit Hilfe eines Interferometers (meistens Michelson-Interferometer). Dabei wird der eine Arm mit bekannter Weglänge (entspricht dem Referenzarm des Interferometers) als Referenz zum Messarm herangezogen. Die Interferenz der Signale (optische Kreuzkorrelation) aus beiden Armen ergibt ein Muster, aus dem eine relative optische Weglänge innerhalb eines Tiefenprofils herausgelesen werden kann. In den eindimensionalen Rasterverfahren wird das Strahlenbündel dann transversal in zwei Richtungen (x-Richtung und y-Richtung) geführt, womit sich ein dreidimensionales Volumen aufnehmen lässt.
Anders als bei der konventionellen Lichtmikroskopie ist bei der optischen Kohärenztomografie die transversale Auflösung von der longitudinalen Auflösung entkoppelt. Die transversale Auflösung wird durch die numerische Apertur der verwendeten Optik bestimmt. Die longitudinale räumliche Auflösung in die Tiefe des Objektes hängt dagegen von der spektralen Breite des verwendeten Lichts ab.

Eingesetzt wird derzeit die optische Kohärenztomografie auch bei der Hautuntersuchung. Hier werden Reflexionen an Grenzflächen der Objekte mit unterschiedlichem Brechungsindex ausgemessen und so ein dreidimensionales Bild rekonstruiert. Eine solche Rekonstruktion wird als Tomografie bezeichnet.

Der große technologische Vorteil der optischen Kohärenztomografie ist die Entkopplung der Tiefenauflösung von der transversalen Auflösung. Die rein auf optischer Reflexion basierende und damit berührungslose Messung erlaubt den Wegfall der in der Mikroskopie angewandten Dünnschnitte, wodurch das Verfahren mikroskopische Bilder im lebenden Gewebe der Objekte erlaubt.
Aufgrund der hohen Selektivität des Wirkprinzips können sehr kleine Signale bei geringen Eingangsleistungen (unterhalb von Nanowatt) detektiert und einer bestimmten Tiefe zugeordnet werden.
Durch die Entwicklung der optischen Kohärenztomografie mit ultrahoher Auflösung (UltraHigh Resolution) zur UHR-OCT können subzelluläre Strukturen im menschlichen Gewebe dargestellt werden.

Ein Verfahren und ein System zur Echtheitsbestimmung der individuell-typischen Merkmale von Prüfobjekten, insbesondere für die Identifikation von Personen anhand von individuell-typischen Merkmalen der Fingerkuppen sind in der Druckschrift DE 10 2004 043 876 A1 beschrieben.
Es werden dabei gegenseitig abhängige sowie nicht abhängige physikalische und/oder physiologische Parameter der Fingerkuppe und/oder der Auflagefläche detektiert, wobei wenigstens eine Wechselbeziehung der Parameter bestimmt wird und wobei wenigstens die Wechselbeziehung der Parameter ausgewertet wird, wobei die gewonnenen Informationen zur Echtheitsbestimmung, der Erkennungssicherheit bzw. der Fälschungssicherheit sowie zur Lebenderkennung genutzt werden.
Generell werden bei dem Verfahren keine Volumendaten aufgenommen. Es wird nur punktuell in die Tiefe gemessen. Die Messung erfolgt mindestens mit einem Sensor. Es wird dabei das Gewebe hinsichtlich einzelner Merkmale untersucht und ausgewertet. Vorzugsweise wird ein Ultraschallsensor eingesetzt.

Ein Verfahren zur Personenidentifizierung mit einer Tiefenmessung an der Haut ist in der Druckschrift DE 10 2006 039 643 A1 beschrieben. Bei dem Verfahren wird ein Untersuchungspunkt der Haut einer Person mit einem elektromagnetischen Messstrahl beaufschlagt. In intrakutane und/oder subkutane Geweberegionen eingedrungene, dort an inneren Strukturen reflektierte und/oder gestreute und danach aus der Haut wieder austretende elektromagnetische Strahlung wird mit einem interferometrischen Sensor erfasst. Die erfassten optischen Signale werden zur Bestimmung mindestens eines biometrischen Merkmals, anhand dessen später eine Personenidentifizierung erfolgt, genutzt.

Es wird die optische Kohärenztomografie für die Untersuchung/Bildgebung eingesetzt. In dem Verfahren muss eine optische Komponente auf den Finger aufgebracht werden. Es wird von einer Seite beleuchtet und von der anderen Seite detektiert. Es werden biometrische Merkmale gemessen, die zur Identifizierung der Person genutzt werden.

Weitere Untersuchungen zum Aspekt der Unterscheidung von echten und imitierten Fingerabdrücken mithilfe optischer Kohärenztomografie finden sich in Meissner et al., "Thin layer finger print fake detection by Optical Coherence Tomography", Biomedizinische Technik 2011, Bd. 56, sowie in Cheng et al., "Artificial Fingerprint Recognition by using Optical Coherence Tomography with Autocorrelation Analysis", Applied Optics, OSA, Bd. 45(36), 2006, sowie in Larin et al., "Three-dimensional imaging of artificial fingerprint by optical coherence tomography", Biometrie Technology for Human Identification V, SPIE, Bd. 6944, 2008. Der Erfindung liegt deshalb die Aufgabe zugrunde, ein Verfahren und eine Anordnung zur Prüfung von Fingerabdrücken auf Echtheit anzugeben, die derart geeignet ausgebildet sind, dass Angriffe mit Dünnschichtimitaten und Vollfingerimitaten auf die Erkennung der Echtheit von Fingerabdrücken von lebenden Fingern abgewehrt werden können. Weiterhin soll zwischen lebenden Fingern sowie toten Fingern (abgetrennten Fingern, Finger von Leichen) differenziert werden können.

Es soll also mittels optischer Kohärenztomografie zumindest eine Klassifizierung zwischen echtem Fingerabdruck und imitiertem Fingerabdruck anhand dreidimensionaler OCT-Daten eines momentan eingegebenen Untersuchungs-Fingerabdruckes und der darunter liegenden Hautschichten durchgeführt werden.

Die Aufgabe wird mit den Merkmalen der Patentansprüche 1 und 12 gelöst.

Das Verfahren zur Prüfung von Fingerabdrücken auf Echtheit mittels optischer Kohärenztomografie weist die Schritte gemäss Patentanspruch 1 auf.

Dabei wird ein dreidimensionales Abbild des gesamten Fingerabdruckes einschließlich der Hautschichten unterhalb der Fingeroberfläche erzeugt. Dazu wird ein Volumendatensatz erstellt. Der gesamte Volumendatensatz wird für die Klassifizierung zwischen echtem Real-Fingerabdruck und Untersuchungs-Fingerabdruck herangezogen.

Der erste Einzelparameter wird als Deckungsgleichheit der Fingerabdrücke festgelegt, wobei bei einem Treffer der oberflächige Fingerabdruck deckungsgleich mit den tieferliegenden Fingerabdrücken zwischen stratum corneum und stratum granulosum sowie zwischen Dermis und Epidermis ist.

Der zweite Einzelparameter wird als Schichtung der Haut festgelegt, wobei die Schichtung die physiologische Schichtung des Hautgewebes betrifft.

Der dritte Einzelparameter wird als Verlauf der Schweißdrüsenkanäle festgelegt, wobei die Schweißdrüsenkanäle immer innerhalb des Gewebes liegende Papillen, die Erhöhungen der Oberfläche eines Fingerabdruckes darstellen, mit den Papillen der äußeren Oberfläche des Fingerabdruckes verbinden.

Der vierte Einzelparameter wird als physiologische Größe der Schweißdrüsenkanäle festgelegt, da die Schweißdrüsenkanäle jeweils eine physiologische Größe in Form eines Durchmessers haben.

Der fünfte Einzelparameter wird als Helixform der Schweißdrüsenkanäle festgelegt, da die Formen der Schweißdrüsenkanäle immer helixförmig sind.

Der sechste Einzelparameter wird als Zick-Zack-Muster der Schweißdrüsenkanäle bei Projektion festgelegt, da die Schweißdrüsenkanäle bei einer Projektion aufgrund der Helixform immer als Zick-Zack-Muster, völlig unabhängig der Projektionsrichtung, resultieren.

Der siebente Einzelparameter wird als Winkel des Zick-Zack-Musters festgelegt, da der Winkel zwischen den einzelnen Zacken des Zick-Zack-Musters in einem physiologischen Intervall liegt.

Der achte Einzelparameter wird als Signalausfall der Schweißdrüsenkanäle zwischen Körnerzellschicht und Stachelzellschicht festgelegt, da die Schweißdrüsenkanäle kein detektierbares Signal der Abtasteinheit zur optischen Kohärenztomografie im Bereich der Stratum granulosum und spinosum sowie der Dermis liefern.

Der neunte Einzelparameter wird als Unterschied der Streuungsintensität der Schichten festgelegt, da die Streuung des Gewebes der Fingerkuppe (Stratum corneum, Stratum granulosum, stratum spinosum, stratum basale, stratum papillare) in einem physiologischen Intervall liegt.

Die Anordnung zur Prüfung von Fingerabdrücken auf Echtheit mittels optischer Kohärenztomografie ist in Anspruch 12 definiert.

Dabei sind programmtechnische Mittel als Ausführende der Verfahrensschritte in der Auswerteeinheit einschließlich der Klassifizierungseinheit gespeichert.

Wesentlicher Bestandteil der Erfindung ist ein Klassifizierungsalgorithmus, der anhand der erfassten 3D-OCT-Datensätze eine Unterscheidung zwischen echtem Finger und Imitat erlaubt. Für eine Entscheidung zur Echtheit von echtem Finger und Imitat werden nicht einzelne biologische Einzelparameter des Fingerhautgewebes herangezogen, sondern eine Kombination aus verschiedenen biologischen Einzelparametern, das sind sowohl biologische Merkmale des Fingerhautgewebes als auch Entscheidungskriterien zu biologischen Parametern, berücksichtigt:
A. der äußere Fingerabdruck (äußerer Schicht) ist deckungsgleich mit den tieferliegenden Fingerabdrücken (innerer Schicht) zwischen stratum corneum und stratum granulosum sowie zwischen Dermis und Epidermis,
B. die physiologische Schichtung des Hautgewebes,
C. die Schweißdrüsen-Kanäle verbinden immer im Gewebe liegende Papillen (Erhöhungen des Fingerabdruckes) mit den Papillen des äußeren Fingerabdruckes,
D. die Schweißdrüsenkanäle haben physiologische Größe (Durchmesser),
E. die Schweißdrüsenkanäle sind immer helixförmig,
F. die Schweißdrüsenkanäle resultieren bei einer Projektion aufgrund der Helixform immer als Zick-Zack-Muster völlig unabhängig der Projektionsrichtung,
G. der Winkel zwischen den einzelnen Zacken des Zick-Zack-Musters liegt in einem physiologischen Intervall,
H. die Schweißdrüsenkanäle liefern kein detektierbares OCT-Signal im Bereich der Stratum granulosum und spinosum sowie der Dermis und
I. die Streuung des Gewebes der Fingerkuppe (Stratum comeum, Stratum granulosum, stratum spinosum, stratum basale, stratum papillare, etc.) liegt in einem physiologischen Intervall.

Werden all diese biologischen Parameter und biologisch orientierten Entscheidungskriterien in ihrer zugehörigen technischen elektrischen Signalumwandlung in der genannten Kompaktheit für die Klassifizierung und für die in die Ausführung der Klassifizierung einbezogenen programmtechnischen Mittel herangezogen, kann eine eindeutige Unterscheidung zwischen dem echten lebenden Finger, der permanent in einer gespeicherten Liste (in einer Permanentspeichereinheit) der Klassifizierungseinheit der lebenden Finger enthalten ist, und einem biologisch schon minimal davon abweichendem anderem lebenden Finger, dessen Einzelparameter in einer temporären Liste (in einer Temporärspeichereinheit) der nicht in einer permanent gespeicherten Liste der Klassifizierungseinheit der lebenden Fingerabdrücke enthalten ist, oder einem Imitat realisiert werden. Die Listen können sich in zugehörigen Speichereinheiten der Auswerteeinheit befinden.

In der Anordnung zur Prüfung von Fingerabdrücken auf Echtheit mittels optischer Kohärenztomografie wird der Fingerabdruck durch einen OCT-Scanner erfasst. Der als Volumendatensatz generierte 3D-Datensatz wird für die Klassifizierung zwischen einem echten Fingerabdruck und einem imitierten Fingerabdruck herangezogen. Die in der Auswerteeinheit vorhandenen oder getrennt davon in einer der Auswerteeinheit zugehörigen Klassifizierungseinheit gespeicherten programmtechnischen Mittel nutzen die genannten Vergleichs-Kriterien, um zu entscheiden, welcher Fingerabdruck auf der Abdruckfläche des OCT-Scanners als echter Fingerabdruck und als imitierter Fingerabdruck mit welchen Zuständen - lebend - und - nicht lebend - einzuordnen ist. Die für die Zustands-Entscheidung erforderlichen programmtechnischen Mittel können in einer Entscheidungslogik der Auswerteeinheit enthalten sein.

Wesentlicher Vorteil der 3D-OCT-Daten ist es, dass damit eine größere Anzahl von Einzelparametern zur Klassifizierung zwischen echtem Real-Fingerabdruck und imitiertem Untersuchungs-Fingerabdruck zur Verfügung steht. Es können mit der optischen Kohärenztomografie Angriffe mit Dünnschichtimitaten und Vollfingerimitaten komplett abgewehrt werden.
Ein weiterer wichtiger Vorteil ist es, dass die Herstellungskosten für entsprechende Imitate exponentiell steigen müssen und somit der finanzielle Aufwand für kriminelle Energien sehr hoch ist, um Schaden zu verursachen. Der durch die Berücksichtigung der vielen Einzelparameter (Abdruckmerkmale) vorgegebene hohe Sicherheitsstandard macht die Authentisierung per Fingerabdruck für den breiten Einsatz (Geldautomaten, Supermarktkassen) überhaupt erst möglich.

Weitere Vorteile der Erfindung bestehen darin, dass der Einsatz der optischen Kohärenztomografie helfen wird, bereits etablierte Anwendungen der Fingerabdrücke (Reisepass, etc.) sicherer zu gestalten und gleichzeitig durch die höhere Sicherheit neue Anwendungen fördern.

Weiterbildung und vorteilhafte Ausgestaltungen sind in weiteren Unteransprüchen angegeben.

Die Erfindung wird anhand eines Ausführungsbeispiels mittels mehrerer Zeichnungen näher erläutert.
Es zeigen:
- Fig. 1: eine schematische Darstellung der Anordnung zur Prüfung von Fingerabdrücken auf Echtheit mittels optischer Kohärenztomografie und einer Auswerteeinheit mit Klassifizierungseinheit,
- Fig. 2: eine schematische Block-Darstellung einer Auswerteeinheit mit einer Klassifizierungseinheit und Ausgabeeinheit im Detail,
- Fig. 3: eine Block-Darstellung einer der Klassifizierungseinheit vorgeschalteten Zerlegungseinheit für die Merkmale im Detail gemäß Fig. 2,
- Fig. 4: eine Blockdarstellung des Verfahren zur Prüfung von Fingerabdrücken auf Echtheit mittels optischer Kohärenztomografie,
- Fig. 5: eine Darstellung der Deckungsgleichheit der Fingerabdrücke, wobei
- Fig. 5a: einen Schnitt durch einen echten Finger und
- Fig. 5b: einen Schnitt durch eine Fingerimitation zeigen,
- Fig. 6: eine Darstellung der Schichtung der Haut an einem Finger, wobei
- Fig. 6a: einen Schnitt durch einen echten Finger,
- Fig. 6b: einen Schnitt durch eine erste Fingerhautimitation, bei der die Schichtung nicht detektierbar ist, und
- Fig. 6c: einen Schnitt durch eine zweite Fingerhautimitation, bei der eine fehlerhafte Schichtung vorhanden ist, zeigen,
- Fig. 7: eine Darstellung des Verlaufs von Schweißdrüsenkanälen, wobei
- Fig. 7a: einen Schnitt durch eine echte Haut eines Fingers, in der der Schweißdrüsenkanal von Erhebung zu Erhebung verläuft,
- Fig. 7b: einen Schnitt durch eine Fingerhautimitation, bei der keine Schweißdrüsenkanäle detektierbar sind, zeigen,
- Fig. 8 eine: Darstellung der physiologischen Größe von Schweißdrüsenkanälen, wobei
- Fig. 8a: einen Schnitt durch eine echte Haut eines Fingers, in der die Schweißdrüsenkanäle einen Durchmesser bis zu 250*µ*m haben,
- Fig. 8b: einen Schnitt durch eine Fingerhautimitation, bei der keine Schweißdrüsenkanäle detektierbar sind, zeigen,
- Fig. 9: eine Darstellung der Helixform von Schweißdrüsenkanälen, wobei
- Fig. 9a: einen Schnitt durch eine echte Haut eines Fingers, in der die Schweißdrüsenkanäle helixförmig sind,
- Fig. 9b: einen Schnitt durch eine Fingerhautimitation, bei der keine Schweißdrüsenkanäle detektierbar sind, zeigen,
- Fig. 10: eine Darstellung von Zick-Zack-Mustern von Schweißdrüsen bei Projektion, wobei
- Fig. 10a: einen Schnitt durch eine echte Haut eines Fingers, in der die Schweißdrüsen bei Projektion in x- und y-Richtung Zick-Zack-Muster ergeben,
- Fig. 10b: eine Draufsicht auf eine echte Haut eines Fingers nach Fig. 8a, in der die Schweißdrüsen bei Projektion in z-Richtung Punkte ergeben,
- Fig. 10c: einen Schnitt durch eine Fingerhautimitation, bei der keine Schweißdrüsenkanäle detektierbar sind, und
- Fig. 10d: eine Draufsicht auf eine Fingerhautimitation, bei der keine Schweißdrüsenkanäle detektierbar sind, zeigen,
- Fig. 11: eine Darstellung eines Winkels eines Zick-Zack-Musters eines echten Fingers nach Fig. 8a, wobei der abgebildete Winkel des Zick-Zack-Musters einen Wert zwischen 10 Grad und 170 Grad besitzt,
- Fig. 12: eine Darstellung eines Hautschnitts eines echten Fingers, wobei
- Fig. 12a: einen Schnitt des echten Haut eines Fingers mit Homschicht, Körnerzellschicht und Stachelzellschicht zeigt, wobei die Schweißdrüsenkanäle kein Signal innerhalb Körnerzellschicht und Stachelzellschicht sowie der Lederhaut,
- Fig. 12b: einen Schnitt durch die Fingerimitation, von der keine Schweißdrüsenkanäle detektierbar sind, zeigen,
- Fig. 13: eine Darstellung des Unterschieds der Streuintensität der Schichten, wobei
- Fig. 13a: einen Schnitt durch die echte Fingerhaut, bei der die Intensitätsunterschiede der einzelnen Schichten im Intensitätsprofil detektierbar sind,
- Fig. 13b: einen Schnitt durch die Fingerhautimitation, bei der weder Intensitätsunterschiede der einzelnen Schichten im Intensitätsprofil noch eine Schichtung detektierbar sind, zeigen.

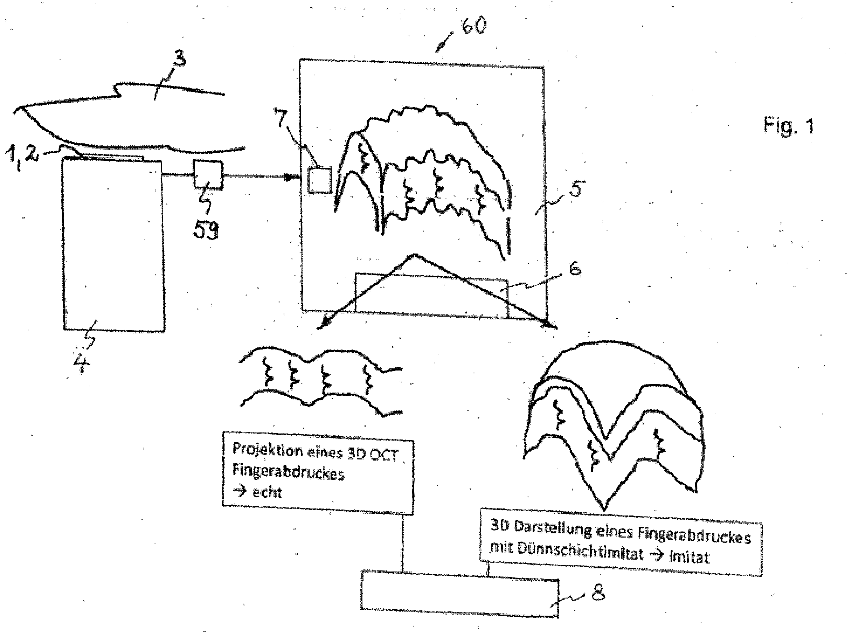

In Fig. 1 ist eine schematische Darstellung der Anordnung 1 zur Prüfung von Fingerabdrücken auf Echtheit mittels optischer Kohärenztomografie (OCT) gezeigt. Der Abdruck 2 des Fingers 3 wird durch einen OCT-Scanner 4 erfasst. Der als Volumendatensatz generierte 3D-Datensatz 7 wird für die Klassifizierung zwischen echtem Fingerabdruck und imitiertem Fingerabdruck herangezogen. Die in der Auswerteeinheit 5 einer der Auswerteeinheit 5 zugehörigen Klassifizierungseinheit 6 gespeicherten programmtechnischen Mittel nutzen Vergleichs-Kriterien, um zwischen echtem und imitiertem Fingerabdruck und zwischen den Zuständen - lebend - und - nicht lebend - zu unterscheiden:
Für die Entscheidung in der Klassifizierungseinheit 6 werden nicht einzelne Einzelparameter des Fingergewebes herangezogen, sondern eine Kombination aus den verschiedenen Einzelparametern - den einzelnen Echtheitsparametern -:
A. die Deckungsgleichheit der Fingerabdrücke:
   Der äußere Fingerabdruck ist deckungsgleich mit den tieferliegenden Fingerabdrücken zwischen stratum corneum und stratum granulosum sowie zwischen Dermis und Epidermis,
B. die Schichtung der Haut:
   Betrifft die physiologische Schichtung des Hautgewebes,
C. der Verlauf de Schweißdrüsenkanäle:
   Die Schweißdrüsenkanäle verbinden immer im Gewebe liegende Papillen (Erhöhungen des Fingerabdruckes) mit den Papillen des äußeren Fingerabdruckes,
D. die physiologische Größe der Schweißdrüsenkanäle:
   Schweißdrüsenkanäle haben jeweils eine physiologische Größe (Durchmesser),
E. die Helixform der Schweißdrüsenkanäle:
   Schweißdrüsenkanäle sind immer helixförmig,
F. das Zick-Zack-Muster der Schweißdrüsen bei Projektion:
   Schweißdrüsenkanäle resultieren bei einer Projektion aufgrund der Helixform immer als Zick-Zack-Muster, völlig unabhängig der Projektionsrichtung,
G. Winkel α des Zick-Zack-Musters:
   Der Winkel α zwischen den einzelnen Zacken des Zick-Zack-Musters liegt in einem physiologischen Intervall,
H. der Signalausfall der Schweißdrüsenkanäle zwischen Körnerzellschicht und Stachelzellschicht:
   die Schweißdrüsenkanäle liefern kein detektierbares OCT-Signal im Bereich der Stratum granulosum und spinosum sowie der Dermis und
I. der Unterschied der Streuungsintensität der Schichten:
   Die Streuung des Gewebes der Fingerkuppe (Stratum comeum, Stratum granulosum, stratum spinosum, stratum basale, stratum papillare, etc.) liegt in einem physiologischen Intervall.

Das Verfahren zur Prüfung von Fingerabdrücken 2 auf Echtheit unter Einsatz einer Anordnung 60 zur Prüfung auf Echtheit mittels optischer Kohärenztomografie,
weist folgende Schritte auf:
- Abtasten von Real-Fingerabdrücken 1 mittels einer Abtasteinheit 4 der optischen Kohärenztomografie,
- Erstellung von dreidimensionalen Abbildern in Form von Volumendatensätzen 7 für die Real-Fingerabdrücke 1,
- Zerlegung der Volumendatensätze 7 der Real-Fingerabdrücke 1 zumindest in einer großen Anzahl von Einzelparametern zugehörigen äquivalenten technischen elektrischen Signalfolgen,
   wobei folgende Einzelparameter festgelegt werden:
   A. Erster Einzelparameter 20: Deckungsgleichheit der äußeren Schicht 17 und der inneren Schicht 18 von Fingerkuppen,
   B. Zweiter Einzelparameter 21: Schichtung der Haut 12,
   C. Dritter Einzelparameter 22: Verlauf von Schweißdrüsenkanälen 13,
   D. Vierter Einzelparameter 23: Physiologische Größe der Schweißdrüsenkanäle 13,
   E. Fünfter Einzelparameter 24: Helixform der Schweißdrüsenkanäle 13,
   F. Sechster Einzelparameter 25: Zick-Zack-Muster der Schweißdrüsenkanäle 13 bei Projektion,
   G. Siebenter Einzelparameter 26: Winkel *α* des Zick-Zack-Musters,
   H. Achter Einzelparameter 27: Signalausfall der Schweißdrüsenkanäle 13 zwischen Körnerzellschicht 14 und Stachelzellschicht 15,
   I. Neunter Einzelparameter 28: Unterschied der Streuungsintensität 16 der Schichten 17,18,
- Permanente Speicherung des Volumendatensatzes 7 des Real-Fingerabdrucks 1 in einer Permanentspeichereinheit 10,
   sowie zur direkten Prüfung eines Untersuchungs-Fingerabdrucks 2,
- Abtasten eines Untersuchungs-Fingerabdrucks 2 mittels derselben Abtasteinheit 4 der optischen Kohärenztomografie,
- Erstellung von dreidimensionalen Abbildern in Form eines Volumendatensatzes 7 für den Untersuchungs-Fingerabdruck 2,
- Zerlegung des Volumendatensatzes 7 des Untersuchungs-Fingerabdrucks 2 zumindest in jeweils eine dem jeweilig nachfolgenden Einzelparameter äquivalente technische elektrische Signalfolge:
   A. Erster Einzelparameter 20: Deckungsgleichheit der Schichten 17, 18 einer Fingerkuppe,
   B. Zweiter Einzelparameter 21: Schichtung der Haut 12,
   C. Dritter Einzelparameter 22: Verlauf der Schweißdrüsenkanäle 13,
   D. Vierter Einzelparameter 23: Physiologische Größe der Schweißdrüsenkanäle 13,
   E. Fünfter Einzelparameter 24: Helixform der Schweißdrüsenkanäle 13,
   F. Sechster Einzelparameter 25: Zick-Zack-Muster der Schweißdrüsenkanäle 13 bei Projektion,
   G. Siebenter Einzelparameter 26: Winkel *α* des Zick-Zack-Musters,
   H. Achter Einzelparameter 27: Signalausfall der Schweißdrüsenkanäle 13 zwischen Körnerzellschicht 14 und Stachelzellschicht 15,
   I. Neunter Einzelparameter 28: Unterschied der Streuungsintensität 16 der Schichten17, 18,
- Temporäre Speicherung des Volumendatensatzes 7 des Untersuchungs-Fingerabdruckes 2 in einer Temporärspeichereinheit 19,
- Vergleich der einzelnen Einzelparameter 20, 21, 22, 23, 24, 25, 26, 27, 28 des tempörar gespeicherten Volumendatensatzes 7 des Untersuchungs-Fingerabdrucks 2 mit allen Einzelparametern 20, 21, 22, 23, 24, 25, 26, 27, 28 der permanent gespeicherten Volumendatensätze 7 der Real-Fingerabdrücke 1 in jeweils der den Einzelparametern 20, 21, 22, 23, 24, 25, 26, 27, 28 äquivalenten technischen elektrischen Signalfolgen zugeordneten Vergleichseinheiten 50, 51, 52, 53, 54, 55, 56, 57, 58,
- Übermittlung der Vergleichsergebnissignale aus allen Vergleichseinheiten 50, 51, 52, 53, 54, 55, 56, 57, 58 an eine die Vergleichergebnisse zusammenfassende Entscheidungslogik 11,
- Ausgeben der Übereinstimmung oder des Unterschiedes zwischen zumindest einem permanent gespeicherten Real-Fingerabdruck 1 und einem temporär gespeicherten Untersuchungs-Fingerabdruck 2 aus der Entscheidungslogik 11, wobei
   - die Übereinstimmung und somit Echtheit definiert sind, wenn alle den Einzelparametern 20, 21, 22, 23, 24, 25, 26, 27, 28 äquivalente technische elektrischen Signalfolgen des zugeordneten temporären Untersuchungs-Fingerabdrucks 2 zumindest einem den Einzelparametern 20, 21, 22, 23, 24, 25, 26, 27, 28 der äquivalenten technischen elektrischen Signalfolgen zugeordneten permanent gespeicherten Real-Fingerabdruck 1 aus der jeweiligen großen Anzahl von permanent gespeicherten Real-Fingerabdrücken 1 entsprechen, und
   - ein Unterschied definiert ist und damit keine Übereinstimmung vorhanden ist, wenn nicht eine der den Einzelparametern 20, 21, 22, 23, 24, 25, 26, 27, 28 zugehörigen Signalfolgen der permanent gespeicherten Real-Fingerabdrücke 1 den Signalfolgen der Einzelparameter 20, 21, 22, 23, 24, 25, 26, 27, 28 des temporären Untersuchungs-Fingerabdrucks 2 entspricht.

Dabei wird ein dreidimensionales Abbild des gesamten Fingerabdruckes 1, 2 einschließlich der Hautschichten unterhalb der Fingeroberfläche erzeugt. Dazu wird ein Volumendatensatz 7 erstellt. Der gesamte Volumendatensatz 7 wird für die Klassifizierung zwischen echtem Real-Fingerabdruck 1 und Untersuchungs-Fingerabdruck 2 herangezogen.

Der erste Einzelparameter 20 wird als Deckungsgleichheit der Fingerabdrücke 1, 2 festgelegt, wobei bei einem Treffer der oberflächige Fingerabdruck deckungsgleich mit den tieferliegenden Fingerabdrücken zwischen stratum corneum und stratum granulosum sowie zwischen Dermis und Epidermis ist.

Der zweite Einzelparameter 21 wird als Schichtung der Haut 12 festgelegt, wobei die Schichtung die physiologische Schichtung des Hautgewebes betrifft.

Der dritte Einzelparameter 22 wird als Verlauf der Schweißdrüsenkanäle 13 festgelegt, wobei die Schweißdrüsenkanäle 13 immer innerhalb des Gewebes liegende Papillen, die Erhöhungen der Oberfläche eines Fingerabdruckes 1, 2 darstellen, mit den Papillen der äußeren Oberfläche des Fingerabdruckes verbinden.

Der vierte Einzelparameter 23 wird als physiologische Größe der Schweißdrüsenkanäle 13 festgelegt, da die Schweißdrüsenkanäle 13 jeweils eine physiologische Größe in Form eines Durchmessers haben.

Der fünfte Einzelparameter 24 wird als Helixform der Schweißdrüsenkanäle 13 festgelegt, da die Formen der Schweißdrüsenkanäle 13 immer helixförmig sind.

Der sechste Einzelparameter 25 wird als Zick-Zack-Muster der Schweißdrüsenkanäle 13 bei Projektion festgelegt, da die Schweißdrüsenkanäle 13 bei einer Projektion aufgrund der Helixform immer als Zick-Zack-Muster, völlig unabhängig der Projektionsrichtung, resultieren, wobei die Projektion in z-Richtung Punkte 29 ergibt.

Der siebente Einzelparameter 26 wird als Winkel des Zick-Zack-Musters 25 festgelegt, da der Winkel zwischen den einzelnen Zacken des Zick-Zack-Musters in einem physiologischen Intervall liegt.

Der achte Einzelparameter 27 wird als Signalausfall der Schweißdrüsenkanäle 13 zwischen Körnerzellschicht 14 und Stachelzellschicht 15 festgelegt, da die Schweißdrüsenkanäle 13 kein detektierbares Signal der Abtasteinheit 4 zur optischen Kohärenztomografie im Bereich der Stratum granulosum und spinosum sowie der Dermis liefern.

Der neunte Einzelparameter 28 wird als Unterschied der Streuungsintensität 16 der Schichten 17, 18 festgelegt, da die Streuung des Gewebes der Fingerkuppe (Stratum comeum, Stratum granulosum, stratum spinosum, stratum basale, stratum papillare) in einem physiologischen Intervall liegt.

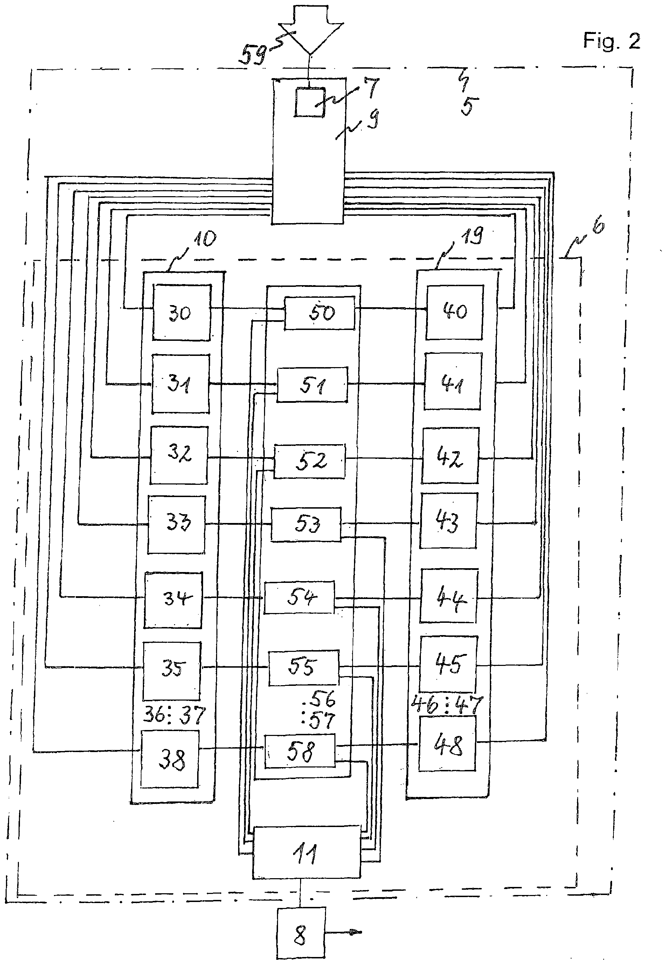

In Fig. 2 ist eine schematische Block-Darstellung einer Auswerteeinheit 5 mit einer Klassifizierungseinheit 6 und Ausgabeeinheit 8 im Detail angegeben, wobei

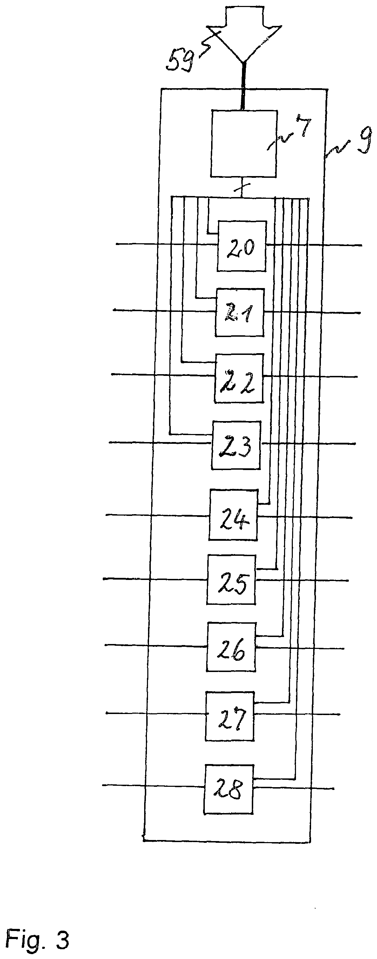

In Fig. 3 eine Block-Darstellung einer der Klassifizierungseinheit 6 vorgeschalteten Zerlegungseinheit 9 für die Separierung in Einzelparameter (einzelne Echtheitsparameter) aus dem Volumendatensatz 7 im Detail gemäß Fig. 2.

Im Folgenden werden die Fig. 1, Fig. 2 und Fig. 3 gemeinsam betrachtet. Die Anordnung 60 zur Prüfung von Fingerabdrücken 2 auf Echtheit mittels optischer Kohärenztomografie unter Verwendung des genannten Verfahrens, umfasst gemäß Fig. 1 und Fig. 2 zumindest
- eine Abtasteinheit 4 zur optische Kohärenztomografie, die zumindest einen Real-Fingerabdruck 1 eines Fingers 3 und einen Untersuchungs-Fingerabdruck 2 in Form einer Datensignalfolge 59 erfasst,
- eine Datenerfassungseinheit 7, in der die Datensignalfolge 59 als ein Volumendatensatz ausgebildeter 3D-Datensatz 7 generiert wird,
- eine Auswerteeinheit 5, in die der Volumendatensatz 7 geleitet wird,
- eine Klassifizierungseinheit 6, die zur Auswerteeinheit 5 gehört,
- programmtechnische Mittel in der Auswerteeinheit 5 für die programmtechnische Klassifizierung zwischen Real-Fingerabdruck 1 und Untersuchungs-Fingerabdruck 2,
wobei weitere folgende Baugruppen nach Fig. 2 und Fig. 3 vorhanden sind:
- eine Zerlegungseinheit 9, die den Volumendatensatz 7 zumindest eines Real-Fingerabdrucks 1 und die den Volumendatensatz 7 des Untersuchungs-Fingerabdruck 2 zumindest in folgende Einzelparameter 20, 21, 22, 23, 24, 25, 26, 27, 28 signaltechnisch separiert:
   A. Erste Einzelparameter 20: Deckungsgleichheit der Fingerabdrücke 1,2,
   B. Zweite Einzelparameter 21: Schichtung der Haut 12,
   C. Dritte Einzelparameter 22: Verlauf der Schweißdrüsenkanäle 13,
   D. Vierte Einzelparameter 23: Physiologische Größe der Schweißdrüsenkanäle 13,
   E. Fünfte Einzelparameter 24: Helixform der Schweißdrüsenkanäle 13,
   F. Sechste Einzelparameter 25: Zick-Zack-Muster der Schweißdrüsenkanäle 13 bei Projektion,
   G. Siebente Einzelparameter 26: Winkel des Zick-Zack-Musters 25,
   H. Achte Einzelparameter 27: Signalausfall der Schweißdrüsenkanäle 13 zwischen Körnerzellschicht 14 und Stachelzellschicht 5,
   I. Neunte Einzelparameter 28: Unterschied der Streuungsintensität 16 der Schichten 17, 18.
   wobei in der Klassifizierungseinheit 6 zumindest folgende Funktionseinheiten 30, 31, 32, 33, 34, 35, 36, 37, 38 einer Permanentspeichereinheit 10 und äquivalent dazu Funktionseinheiten 40, 41, 42, 43, 44, 45, 46, 47, 48 einer Temporärspeichereinheit 19 miteinander korrespondierend vorhanden sind:
   - analoge Funktionseinheiten 30, 40 für den ersten Einzelparameter 20,
   - analoge Funktionseinheiten 31, 41 für den zweiten Einzelparameter 21,
   - analoge Funktionseinheiten 32, 42 für den dritten Einzelparameter 22,
   - analoge Funktionseinheiten 33, 43 für den vierten Einzelparameter 23,
   - analoge Funktionseinheiten 34, 44 für den fünften Einzelparameter 24,
   - analoge Funktionseinheiten 35, 45 für den sechsten Einzelparameter 25,
   - analoge Funktionseinheiten 36, 46 für den siebenten Einzelparameter 26,
   - analoge Funktionseinheiten 37, 47 für den achten Einzelparameter 27,
   - analoge Funktionseinheiten 38, 48 für den neunten Einzelparameter 28,
   sowie jeweils den analogen Funktionseinheiten zugeordnete Vergleichseinheiten 50, 51, 52, 53, 54, 55, 56, 57, 58,
   die zwischen den jeweils analogen Funktionseinheiten 30, 31, 32, 33, 34, 35, 36, 37, 38; 40, 41, 42, 43, 44, 45, 46, 47, 48 gleichen Einzelparameters 20, 21, 22, 23, 24, 25, 26, 27, 28 zum Vergleichen angeordnet sind, wobei die Vergleichseinheiten 50, 51, 52, 53, 54, 55, 56, 57, 58 bei Übereinstimmung des realen Einzelparameters und des temporären Einzelparameters aus jeweils einer analogen Funktionseinheit einen Treffer "1" und bei Nicht-Übereinstimmung keinen Treffer "0" signaltechnisch markieren,
   sowie eine Entscheidungslogik 11, die mit allen Vergleichseinheiten 50, 51, 52, 53, 54, 55, 56, 57, 58 in Verbindung steht und die einzelnen Treffer-Ergebnisse "1", "0" übernimmt und tabellarisch zusammenstellt,
   wobei nur bei einem Ergebnis mit maximaler, der Anzahl der Einzelparameter entsprechender Trefferzahl eine Übereinstimmung gegeben ist und ein Signal zur geprüften Echtheit des Untersuchungs-Fingerabdruckes 2 bereitgestellt wird, und
- eine Ausgabeeinheit 8, die das Ergebnissignal ausgibt.

Die Abtasteinheit 4 zur optischen Kohärenztomografie kann ein Fingerbildsensor mit CCD-Kamera sein.

Die Zerlegungseinheit 9 zur Separierung der Einzelparameter 20, 21, 22, 23, 24, 25, 26, 27, 28 kann sich in der Auswerteeinheit 5 befinden.

Die Entscheidungslogik 11 zur Zustandsfestlegung der Echtheit des Untersuchungs-Fingerabdrucks 2 kann programmtechnische Mittel enthalten.

Dabei sind programmtechnische Mittel als Ausführende der Verfahrensschritte in der Auswerteeinheit 5 einschließlich der Klassifizierungseinheit 6 gespeichert.

Exemplarisch sind ein 3D-Fingerabdruck als Inhalt der Auswerteinheit 5 und eine Projektion eines 3D-Datensatzes nach Durchgang durch die Klassifizierungseinheit 6 dargestellt, wobei die physiologische Schichtung der Haut, die Papillen, die Schweißdrüsenkanäle, die Orientierung der Schweißdrüsenkanäle, die Helixform der Schweißdrüsenkanäle usw. in der Ausgabe 8 erkennbar sind. Weiterhin ist ein 3D-OCT-Datensatz eines Dünnschichtimitates nach Durchgang durch die Klassifizierungseinheit 6 in der Ausgabeeinheit 8 zu erkennen.

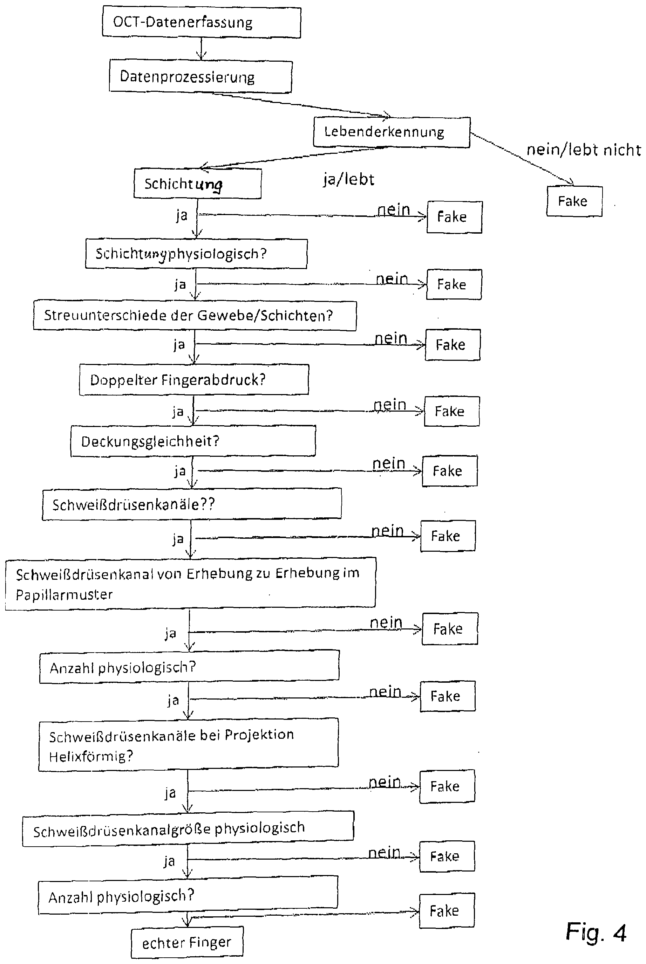

In Fig. 4 ist eine Blockdarstellung des Verfahren zur Prüfung von Fingerabdrücken auf Echtheit mittels optischer Kohärenztomografie gezeigt, wobei die gespeicherten programmtechnischen Mittel zumindest als Ausführende der Verfahrensschritte in der Auswerteeinheit 5 einschließlich in der Klassifizierungseinheit 6 vorhanden sind.
Nach der OCT-Datenerfassung erfolgt durch eine Datenprozessierung eine Lebenderkennung mit der abschließenden Entscheidung, ob ein echter Real-Fingerabdruck oder ein echter Untersuchungs-Fingerabdruck 2 oder ein imitierter Untersuchungs-Fingerabdruck 2 erkannt worden ist. Die Lebenderkennung erfolgt über die physiologische Schichtung der Haut. Ein Entscheidungskriterium stellen die Streuungsunterschiede des Gewebes bzw. der Schichten der Haut dar. Bei dem Vergleich mit einem zweiten Fingerabdruck kann sich eine Deckungsgleichheit bei einer Erkennung eines echten Fingerabdruckes ergeben.
Eine Überprüfung der Anordnung der Schweißdrüsenkanäle auch im Vergleich zu dem Papillenmuster wird erfolgen. Verglichen wird auch die physiologische Anzahl der Papillen. Das Weiteren werden die Schweißdrüsenkanäle 13 auf ihre Heliform programmtechnisch untersucht. Eine Rolle spielt auch die physiologischen Schweißdrüsenkanalgröße und deren physiologische Anzahl. Erst die Übereinstimmung in der Kombination aller Einzelparameter 20, 21, 22, 23, 24, 25, 26, 27, 28 ergibt eine Erkennung auf Echtheit des Untersuchungs-Fingerabdrucks 2 zu einem bereits vorher gespeicherten Real-Fingerabdrucks 1.

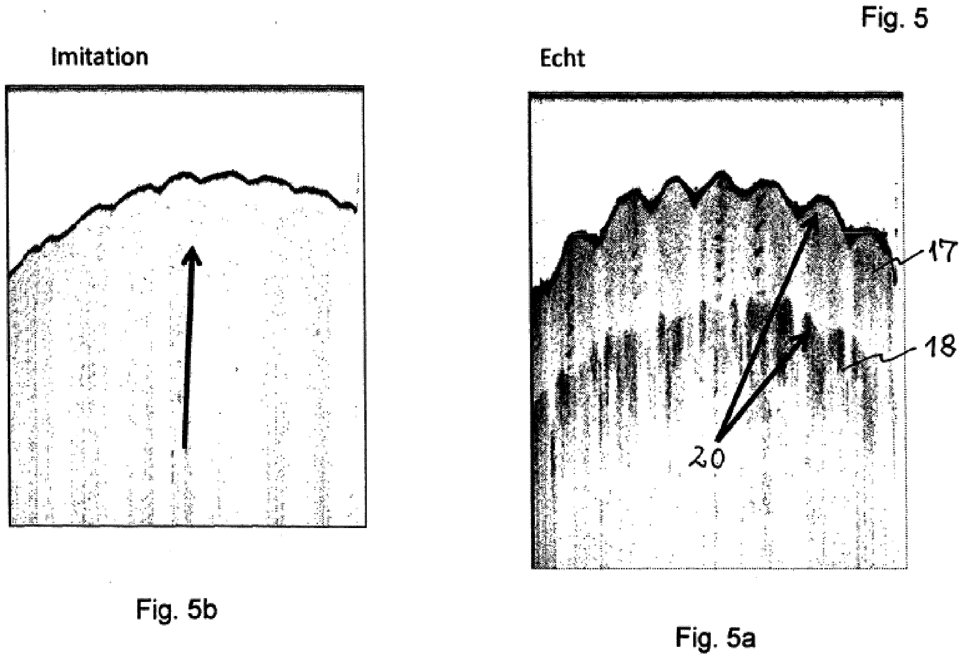

In Fig. 5 ist eine Darstellung der Deckungsgleichheit 20 der Schichtung 17, 18 eines Fingerabdruckes angegeben, wobei die Fig. 5a einen Schnitt durch einen echten Finger und die Fig. 5b einen Schnitt durch eine Fingerimitation zeigen.

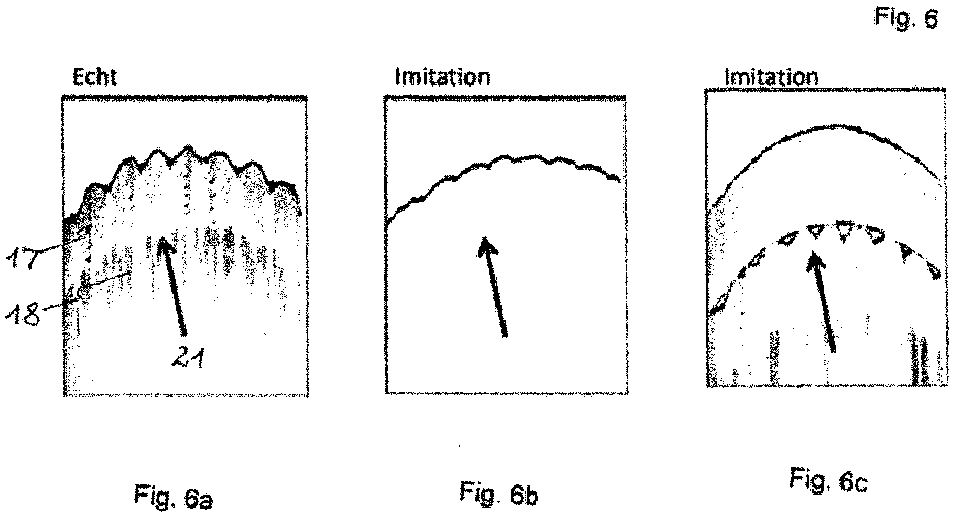

In Fig. 6 ist eine Darstellung der Schichtung 21 der Haut an einem Finger angegeben, wobei die Fig. 6a einen Schnitt durch einen echten Finger mit den Schichten 17, 18, die Fig. 6b einen Schnitt durch eine erste Fingerhautimitation, bei der die Schichtung nicht detektierbar ist, und die Fig. 6c einen Schnitt durch eine zweite Fingerhautimitation, bei der eine fehlerhafte Schichtung vorhanden ist, zeigen.

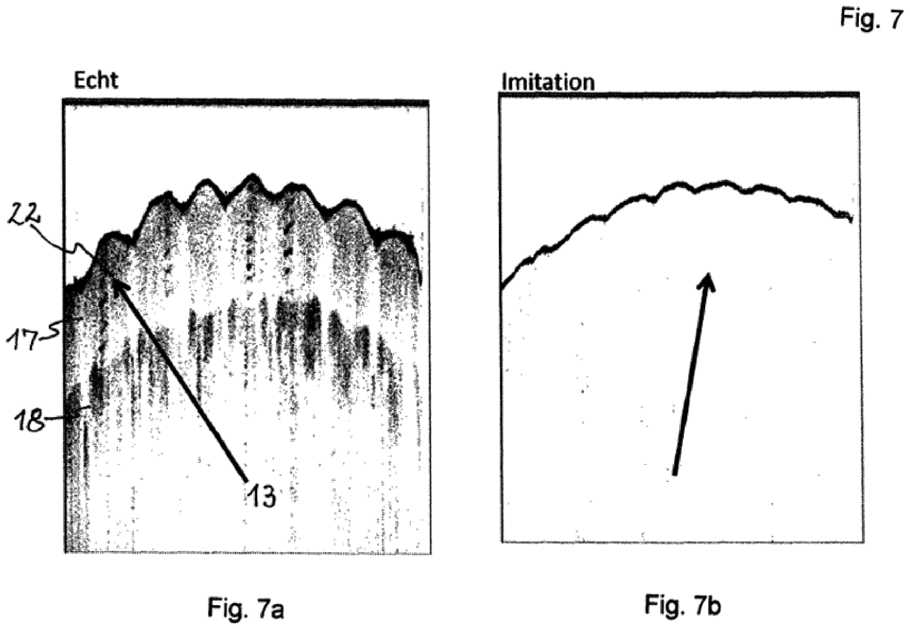

In Fig. 7 eine Darstellung des Verlaufs 22 von Schweißdrüsenkanälen 13 gezeigt, wobei die Fig. 7a einen Schnitt durch eine echte Haut eines Fingers, in der der Schweißdrüsenkanal 13 von Erhebung (Papille) zu Erhebung (Papille) verläuft, und die Fig. 7b einen Schnitt durch eine Fingerhautimitation, bei der keine Schweißdrüsenkanäle detektierbar sind, zeigen.

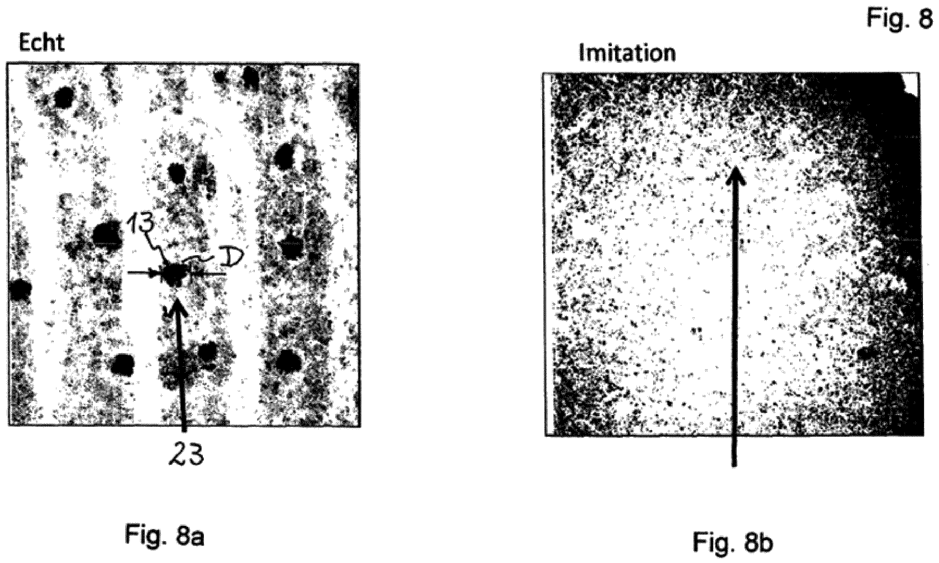

In Fig. 8 ist eine Darstellung der physiologishen Größe 23 von Schweißdrüsenkanälen 13 angegeben, wobei die Fig. 8a einen Schnitt durch eine echte Haut eines Fingers, in der die Schweißdrüsenkanäle 13 einen Durchmesser D bis zu 250*µ*m haben, und die Fig. 8b einen Schnitt durch eine Fingerhautimitation, bei der keine Schweißdrüsenkanäle 13 detektierbar sind, zeigen.

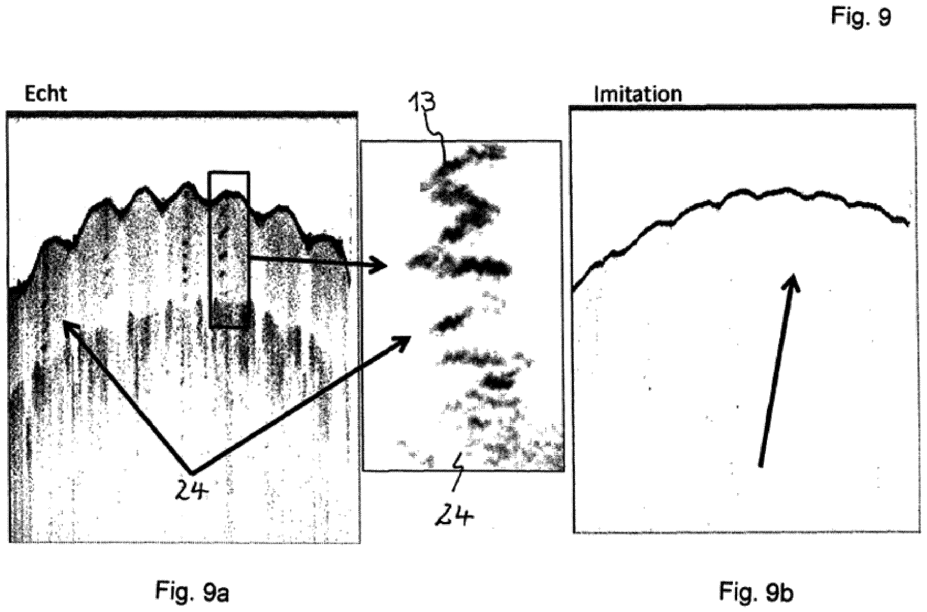

In Fig. 9 ist eine Darstellung der Helixform 24 von Schweißdrüsenkanälen 13, wobei die Fig. 9a einen Schnitt durch eine echte Haut eines Fingers, in der die Schweißdrüsenkanäle 13 helixförmig sind, und die Fig. 9b einen Schnitt durch eine Fingerhautimitation, bei der keine Schweißdrüsenkanäle detektierbar sind, zeigen.

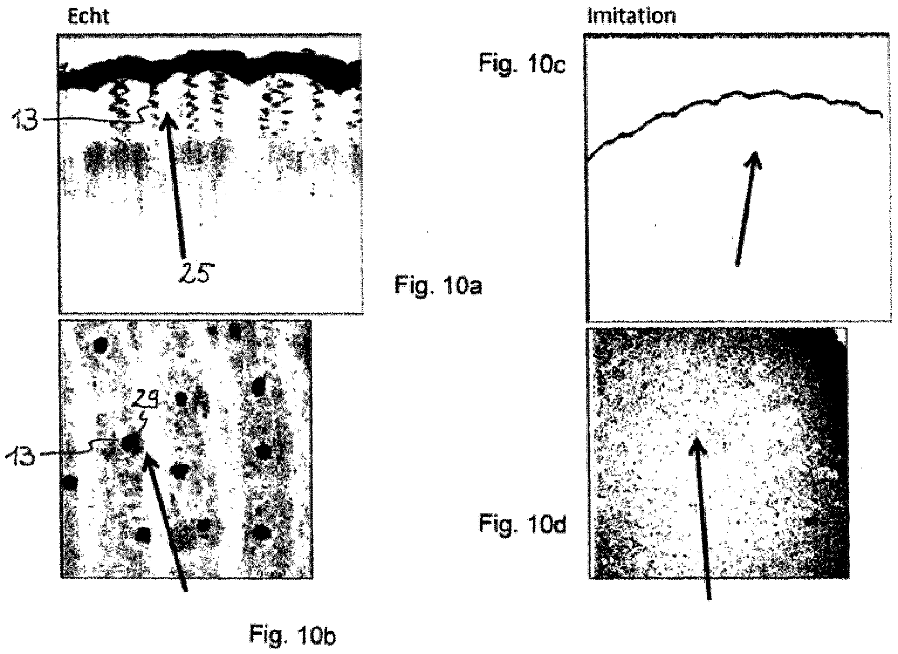

In Fig. 10 ist eine Darstellung von Zick-Zack-Mustern 25 von Schweißdrüsenkanälen bei Projektion gezeigt, wobei die Fig. 10a einen Schnitt durch eine echte Haut eines Fingers, in der die Schweißdrüsen 13 bei Projektion in x- und y-Richtung Zick-Zack-Muster 25 ergeben, die Fig. 10b eine Draufsicht auf eine echte Haut eines Fingers nach Fig. 8a, in der die Schweißdrüsen bei Projektion in z-Richtung Punkte ergeben, sowie die Fig. 10c einen Schnitt durch eine Fingerhautimitation, bei der keine Schweißdrüsenkanäle detektierbar sind, und die Fig. 10d eine Draufsicht auf eine Fingerhautimitation, bei der auch keine Schweißdrüsenkanäle detektierbar sind, zeigen.

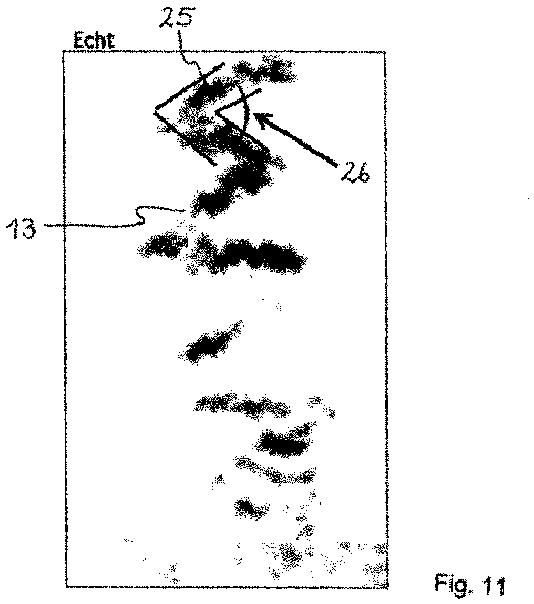

In Fig. 11 eine Darstellung eines Winkels *α* 26 eines Zick-Zack-Musters 25 eines echten Fingers nach Fig. 8a gezeigt, wobei der abgebildete Winkel α 26 des Zick-Zack-Musters 25 einen Wert zwischen 10 Grad und 170 Grad besitzen kann.

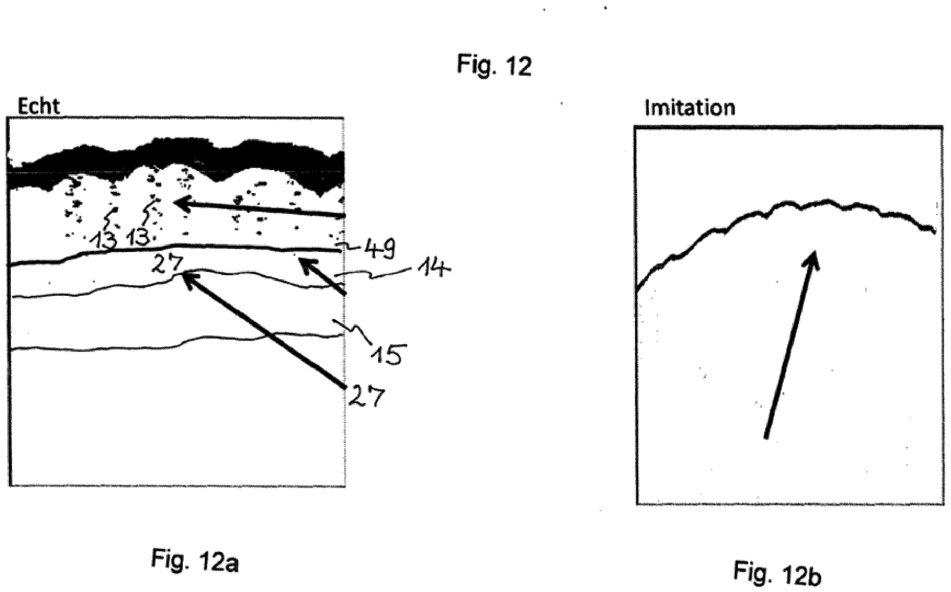

In Fig. 12 ist eine Darstellung eines Hautschnitts eines echten Fingers angegeben, wobei die Fig. 12a einen Schnitt des echten Haut eines Fingers mit Hornschicht 49, Körnerzellschicht 14 und Stachelzellschicht 15, wobei die Schweißdrüsenkanäle 13 kein Signal 27 innerhalb Körnerzellschicht 14 und Stachelzellschicht 15 sowie der Lederhaut, wobei die Fig. 12b einen Schnitt durch die Fingerimitation, von der keine Schweißdrüsenkanäle detektierbar sind, zeigen.

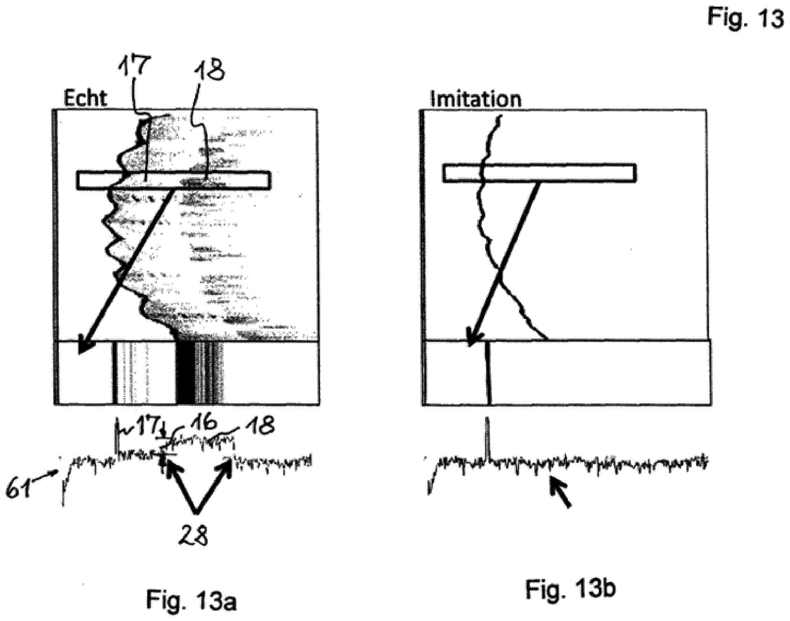

In Fig. 13 ist eine Darstellung des Unterschieds der Streuungsintensität 28 der Schichten 17, 18 gezeigt, wobei die Fig. 13a einen Schnitt durch die echte Fingerhaut, bei der die Intensitätsunterschiede der einzelnen Schichten 17, 18 im Intensitätsprofil 61 detektierbar sind, die Fig. 13b einen Schnitt durch die Fingerhautimitation, bei der weder Intensitätsunterschiede der einzelnen Schichten im Intensitätsprofil noch eine Schichtung detektierbar sind, zeigen.

Mit Hilfe des vorgenannten erfindungsgemäßen Verfahrens und der Anordnung 60 kann die Echtheit von Fingerabdrücken untersucht werden. Bei der Echtheit eines Fingerabdrucks wird hierbei im Gegensatz zum angegebenen Stand der Technik nicht der herkömmliche Fingerabdruck an sich gemeint.
Unter einem herkömmlichen Fingerabdruck wird ein Muster verstanden, welches eine reine 2D-Information beinhaltet und somit volumenfrei ist. Das Muster, welches als Fingerabdruck bezeichnet wird, kann zur Identifizierung von Personen genutzt werden. Die Echtheit eines Fingerabdruckes nachzuweisen, ist immer schwer, da ein Fingerabdruckmuster immer echt ist. Was in Bezug auf Fingerabdrücke meistens mit Echtheit gemeint ist, ist die Frage, ob der Fingerabdruck zu der Person gehört, die sich versucht, mit diesem Fingerabdruck zu identifizieren. Gehört der Fingerabdruck zu der entsprechenden Person, wird im Allgemeinen von Echtheit gesprochen. Gehört der Fingerabdruck nicht zu der entsprechenden Person, wird von unechtem Fingerabdruck gesprochen. Das heißt, dass der Fingerabdruck nicht zu der entsprechenden Person gehört.
Aber: Der Fingerabdruck an sich ist trotzdem echt. Dieser Fingerabdruck ist ein zweidimensionales Muster, welches einen echten Fingerabdruck darstellt, nur eben nicht den Fingerabdruck der entsprechenden Person.

Im Rahmen der vorliegenden Erfindung ist Echtheit anders definiert. Die vorliegende Erfindung mit der Anordnung 60 untersucht bzw. unterscheidet nicht, ob ein zweidimensionales Fingerabdruckmuster echt oder unecht ist. Das heißt, es wird nicht überprüft, ob der Fingerabdruck zu der entsprechenden Person gehört.
Das erfindungsgemäße Verfahren untersucht, ob der aufgelegte Fingerabdruck auf natürliche Weise gewachsen ist bzw. sich auf dem Finger-/Hautgewebe derjenigen Person befindet, welche sich versucht, damit zu identifizieren. Um eine Klassifizierung in "Echt" und "Unecht" durchzuführen, wird im Rahmen des erfindungsgemäßen Verfahrens ein dreidimensionaler Volumendatensatz der Fingeroberfläche in einer elektronischen Zerlegungseinheit erzeugt und der in Datensätze zerlegte Volumendatensatz wird danach ausgewertet. Für die erfindungsgemäße Echtheitsprüfung wird die optische Kohärenztomografie eingesetzt.

Wenn im Rahmen des erfindungsgemäßen Verfahrens und der erfindungsgemäßen Anordnung 60 von Echtheit gesprochen wird, bedeutet dies:
ECHT:
   - Die Echtheit wird beschrieben durch die Eigenschaften des Gewebes, auf dem sich der Fingerabdruck befindet.
   - Es wird das Fingerabdruckvolumen untersucht.
   - Der Fingerabdruck befindet sich auf einem Finger.
   - Der Finger besteht aus Gewebe.
   - Das Gewebe ist biologischen Ursprungs.
   - Es handelt sich um Hautgewebe.
   - Das Gewebe ist physiologisch logisch gegliedert.
   - Das Gewebe ist inhomogen.
   - Das Gewebe besitzt charakteristische Merkmale (Schweißdrüsenkanäle).
   - Die charakteristischen Eigenschaften müssen physiologisch logisch sein.
   - Das Gewebe ist lebend.
UNECHT:
   - Der Fingerabdruck gehört nicht zu dem unterliegenden Gewebe.
   - Der zweidimensionale Fingerabdruck ist nicht auf Fingerhautgewebe Aufgebracht.
   - Das Gewebe kann nicht biologischen Ursprungs sein.
   - Das Gewebe kann homogen sein.
   - Das Gewebe kann tot sein.
   - Die Struktur des Volumenfingerabdruckes kann physiologisch unlogisch Sein.
   - Es können charakteristische Einzelmerkmale im Volumenfingerabdruck auftreten welche nicht physiologisch sein können.
   - Die Schichtung kann physiologisch unlogisch sein.
   - Das unterliegende Gewebe kann tot sein.

Um eine Klassifizierung in "Echt" und "Unecht", im Sinne der oben beschriebenen Echtheit, durchzuführen, wird erfindungsgemäß der Volumenfingerabdruck in eine Anzahl von einzelnen Echtheitsparametern zerlegt. Es wird aus dem Volumendatensatz eine Maske von Einzelparametern entnommen und mit einer Referenzmaske verglichen. Dabei werden die aus dem aufgenommenen Volumendatensatz 7 eines Untersuchungs-Fingerabdrucks erstellten parameterzugehörigen Datensätze einer vorgegebenen elektronischen Maske von Einzelparametern 20, 21, 22, 23, 24, 25, 26, 27, 28 zugeordnet, wobei die dem Untersuchungs-Fingerabdruck zugeordnete datensatzgefüllte Maske mit einer Echtheitsparametern entsprechende Vergleichsdatensätze speichernden, vorgegebenen Referenzmaske verglichen wird, wobei die Vergleichsdatensätze den einzelnen gespeicherten Echtheitsparametern 20, 21, 22, 23, 24, 25, 26, 27, 28 entsprechen, wobei die Datensatzfelder der vorgegebenen datensatzzufüllenden Maske mit den Datensatzfeldern der Referenzmaske übereinstimmen. Die vorgegebene Maske kann z.B. in Form eines elektronischen Datensatzformulars oder einer Dateienfeldmaske ausgebildet sein, wobei die der Maske zugeordneten Masken-Datensatzfelder oder Masken-Dateienfelder den einzelnen Echtheitsparametern zugeordnet sind.

Die einzelnen Echtheitsparameter werden mit einzelnen Vergleichs- bzw. Referenzparametern, welche der Echtheit entsprechen, verglichen. Durch die Vergleiche ist eine Klassifizierung in "Echt" und "Unecht" möglich, wobei "Echt" ein zweidimensionaler Fingerabdruck auf lebendem Fingerhautgewebe ist und wobei ein unechter Fingerabdruck den im Rahmen des erfindungsgemäßen Verfahrens und der erfindungsgemäßen Anordnung 60 beschriebenen einzelnen Echtheitsparametern nicht entspricht.

Bei dem erfindungsgemäßen Verfahren und der zugehörigen Anordnung 60 erfolgen die Beleuchtung und die Detektion mittels eines Strahlenganges. Das heißt, das zu detektierende Licht geht den gleichen Weg wie das Beleuchtungslicht, nur in anderer Richtung. Es ist nicht notwendig, optische Komponenten auf den Finger aufzulegen. Die erfindungsgemäße Anordnung 60 ermöglicht eine kontaktfreie Prüfung. Es werden keine biometrischen Merkmale gemessen. Ein biometrisches Merkmal wird zur Identifizierung genutzt. Mit dem erfindungsgemäßen Verfahren wird die Unterlage bzw. das Gewebe, auf dem sich der zweidimensionale Fingerabdruck, welcher das biometrische Merkmal ist, befindet bzw. aufgebracht. Die vorliegende Erfindung wird nicht genutzt, um eine Identifikation von Personen anhand biometrischer Merkmale durchzuführen. Es wird nur Echtheit eines Fingerabdruckes nach der vordem angegebenen Definition geprüft.

In der vorliegenden Erfindung werden dazu detaillierte Angaben hinsichtlich der einzelnen Echtheitsparameter gemacht.

Dafür, dass keine biometrischen Merkmale hergezogen werden, kann eine Vielzahl von einzelnen Parametern eingesetzt werden. Die einzelnen Echtheitsparameter sind in dem erfindungsgemäßen Verfahren und der zugehörigen Anordnung 60 definiert und sind keine biometrischen Merkmale.

In Fig. 5a ist bei einem echten Fingerabdruck die Deckungsgleichheit 20 von äußerem und innerem Fingerabdruck gegeben. Die Schichtungen 17, 18 sind detektierbar.

In Fig. 5b ist bei einer Imitation keine Schichtung detektierbar, es besteht keine Deckungsgleichheit.

In Fig. 10b sind die Punkte mit dem Bezugszeichen 29 versehen.

In Fig. 12a sind bei einem echten Fingerabdruck die Schweißdrüsenkanäle 13 detektierbar.

In Fig. 13a sind bei einem echten Fingerabdruck die als neunter Einzelparameter geltenden Intensitätsunterschiede mit dem Bezugszeichen 28 versehen.

### Bezugszeichenliste

1 Real-Fingerabdruck
2 Untersuchungs-Fingerabdruck
3 Finger
4 OCT-Scanner/optische Kohärenztomografie-Einheit
5 Auswerteeinheit
6 Klassifizierungseinheit
7 OCT-Datensatz/Volumendatensatz
8 Ausgabeeinheit
9 Zerlegungseinheit
10 Permanentspeichereinheit
11 Entscheidungslogik
12 Haut
13 Schweißdrüsenkanäle
14 Körnerzellschicht
15 Stachelzellschicht
16 Streuungsintensität
17 Erste Schicht
18 Zweite Schicht
19 Temporärspeicherschicht
20 Erster Einzelparameter
21 Zweiter Einzelparameter
22 Dritter Einzelparameter
23 Vierter Einzelparameter
24 Fünfter Einzelparameter
25 Sechster Einzelparameter
26 Siebenter Einzelparameter
27 Achter Einzelparameter
28 Neunter Einzelparameter
29 Punkte
30 analoge Funktionseinheit
31 analoge Funktionseinheit
32 analoge Funktionseinheit
33 analoge Funktionseinheit
34 analoge Funktionseinheit
35 analoge Funktionseinheit
36 analoge Funktionseinheit
37 analoge Funktionseinheit
38 analoge Funktionseinheit
39 analoge Funktionseinheit
40 analoge Funktionseinheit
41 analoge Funktionseinheit
42 analoge Funktionseinheit
43 analoge Funktionseinheit
44 analoge Funktionseinheit
45 analoge Funktionseinheit
46 analoge Funktionseinheit
47 analoge Funktionseinheit
48 analoge Funktionseinheit
49 Hornschicht
50 erste Vergleichseinheit
51 zweite Vergleichseinheit
52 dritte Vergleichseinheit
53 vierte Vergleichseinheit
54 fünfte Vergleichseinheit
55 sechste Vergleichseinheit
56 siebente Vergleichseinheit
57 achte Vergleichseinheit
58 neunte Vergleichseinheit
59 Datenerfassung
60 erfindungsgemäße Anordnung
61 Intensitätsprofil

## Patentansprüche

1. Verfahren zur Prüfung von Fingerabdrücken (2) auf Echtheit mittels optischer Kohärenztomografie, wobei das Verfahren zumindest folgende Schritte aufweist:
- Abtasten von Real-Fingerabdrücken (1) mittels einer Abtasteinheit (4) der optischen Kohärenztomografie,
- Erstellung von dreidimensionalen Abbildern in Form von Volumendatensätzen (7),
- Zerlegung der Volumendatensätze (7) der Real-Fingerabdrücke (1) in jeweils neun Einzelparameter in Form von einzelnen Echtheitsparametern äquivalenten technischen elektrischen Signalfolgen,
- permanente Speicherung der Volumendatensätze (7) der Real-Fingerabdrücke (1), sowie
- Abtasten eines Untersuchungs-Fingerabdrucks (2) mittels derselben Abtasteinheit (4),
- Erstellung von dreidimensionalen Abbildern in Form eines Volumendatensatzes (7),
- Zerlegung des Volumendatensatzes (7) des Untersuchungs-Fingerabdrucks (2) in jeweils eine den neun Einzelparameter äquivalente technische elektrische Signalfolge,
- temporäre Speicherung des Volumendatensatzes (7) des Untersuchungs-Fingerabdruckes (2) in einer Temporärspeichereinheit (19), wobei die neun Einzelparameter sind:
A. Erster Einzelparameter (20): Deckungsgleichheit von äußerer Fingerschicht (17) und innerer Fingerschicht (18),
B. Zweiter Einzelparameter (21): Schichtung der Haut (12),
C. Dritter Einzelparameter (22): Verlauf von Schweißdrüsenkanälen (13),
D. Vierter Einzelparameter (23): Physiologische Größe der Schweiß- drüsenkanäle (13),
E. Fünfter Einzelparameter (24): Helixform der Schweißdrüsenkanäle (13),
F. Sechster Einzelparameter (25): Zick-Zack-Muster der Schweißdrüsenkanäle (13) bei Projektion,
G. Siebenter Einzelparameter (26): Winkel α des Zick-Zack-Musters,
H. Achter Einzelparameter (27): Signalausfall der Schweißdrüsenkanäle (13) zwischen Körnerzellschicht (14) und Stachelzellschicht (15),
I. Neunter Einzelparameter (28): Unterschied der Streuungsintensität (16) der Schichten (17, 18),
- Vergleich der neun Einzelparameter (20, 21, 22, 23, 24, 25, 26, 27, 28) des temporär gespeicherten Volumendatensatzes (7) des Untersuchungs-Fingerabdrucks (2) mit allen Einzelparametern (20, 21, 22, 23, 24, 25, 26, 27, 28) der permanent gespeicherten Volumendatensätze (7) der Real-Fingerabdrücke (1) in jeweils der den Einzelparametern (20, 21, 22, 23, 24, 25, 26, 27, 28) äquivalenten technischen elektrischen Signalfolgen zugeordneten Vergleichseinheiten (50, 51, 52, 53, 54, 55, 56, 57, 58),
- Übermittlung der Vergleichsergebnissignale aus allen Vergleichseinheiten (50, 51, 52, 53, 54, 55, 56, 57, 58) an eine die Vergleichergebnisse zusammenfassende Entscheidungslogik (11),
- Ausgeben der Übereinstimmung oder des Unterschiedes zwischen zumindest einem permanent gespeicherten Real-Fingerabdruck (1) und dem temporär gespeicherten Untersuchungs-Fingerabdruck (2) aus der Entscheidungslogik (11), wobei
- die Übereinstimmung und somit Echtheit definiert sind, wenn alle den Einzelparametern (20, 21, 22, 23, 24, 25, 26, 27, 28) äquivalente technische elektrische Signalfolgen des zugeordneten temporären Untersuchungs-Fingerabdrucks (2) zumindest einem den Einzelparametern (20, 21, 22, 23, 24, 25, 26, 27, 28) der äquivalenten technischen elektrischen Signalfolgen zugeordneten permanent gespeicherten Real-Fingerabdruck (1) aus den permanent gespeicherten Real-Fingerabdrücken (1) entsprechen und
- ein Unterschied definiert ist und damit keine Übereinstimmung vorhanden ist, wenn nicht eine der den Einzelparametern (20, 21, 22, 23, 24, 25, 26, 27, 28) zugehörigen Signalfolgen der permanent gespeicherten Real-Fingerabdrücke (1) den Signalfolgen der Einzelparameter (20, 21, 22, 23, 24, 25, 26, 27, 28) des temporären Untersuchungs-Fingerabdrucks (2) entspricht.

2. Verfahren nach Anspruch 1,
**dadurch gekennzeichnet,**
**dass** der erste Einzelparameter (20) als Deckungsgleichheit der Fingerabdrücke (1, 2) festgelegt wird, wobei bei einem Treffer der oberflächige Fingerabdruck deckungsgleich mit den tieferliegenden Fingerabdrücken zwischen stratum corneum und stratum granulosum sowie zwischen Dermis und Epidermis ist.

3. Verfahren nach Anspruch 1,
**dadurch gekennzeichnet,**
**dass** der zweite Einzelparameter (21) als Schichtung der Haut (12) festgelegt wird, wobei die Schichtung die physiologische Schichtung des Hautgewebes betrifft.

4. Verfahren nach Anspruch 1,
**dadurch gekennzeichnet,**
**dass** der dritte Einzelparameter (22) als Verlauf der Schweißdrüsenkanäle (13) festgelegt wird, wobei die Schweißdrüsenkanäle (13) immer innerhalb des Gewebes liegende Papillen, die Erhöhungen der Oberfläche eines Fingerabdruckes (1, 2) darstellen, mit den Papillen der äußeren Oberfläche des Fingerabdruckes verbinden.

5. Verfahren nach Anspruch 1,
**dadurch gekennzeichnet,**
**dass** der vierte Einzelparameter (23) als physiologische Größe der Schweißdrüsenkanäle (13) festgelegt wird, da die Schweißdrüsenkanäle (13) jeweils eine physiologische Größe in Form eines Durchmessers haben.

6. Verfahren nach Anspruch 1,
**dadurch gekennzeichnet,**
**dass** der fünfte Einzelparameter (24) als Helixform der Schweißdrüsenkanäle (13) festgelegt wird, da die Formen der Schweißdrüsenkanäle (13) immer helixförmig sind.

7. Verfahren nach Anspruch 1,
**dadurch gekennzeichnet,**
**dass** der sechste Einzelparameter (25) als Zick-Zack-Muster der Schweißdrüsenkanäle (13) bei Projektion festgelegt wird, da die Schweißdrüsenkanäle (13) bei einer Projektion aufgrund der Helixform immer als Zick-Zack-Muster, völlig unabhängig der Projektionsrichtung, resultieren.

8. Verfahren nach Anspruch 1,
**dadurch gekennzeichnet,**
**dass** der siebente Einzelparameter (26) als Winkel *α* des Zick-Zack-Musters (25) festgelegt wird, da der Winkel α zwischen den einzelnen Zacken des Zick-Zack-Musters in einem physiologischen Intervall liegt.

9. Verfahren nach Anspruch 1,
**dadurch gekennzeichnet,**
**dass** der achte Einzelparameter (27) als Signalausfall der Schweißdrüsenkanäle (13) zwischen Körnerzellschicht (14) und Stachelzellschicht (15) festgelegt wird, da die Schweißdrüsenkanäle (13) kein detektierbares Signal der Abtasteinheit (4) zur optischen Kohärenztomografie im Bereich der Stratum granulosum und spinosum sowie der Dermis liefern.

10. Verfahren nach Anspruch 1,
**dadurch gekennzeichnet,**
**dass** der neunte Einzelparameter (28) als Unterschied der Streuungsintensität (16) der Schichten (17, 18) festgelegt wird, da die Streuung des Gewebes der Fingerkuppe umfassend Stratum corneum, Stratum granulosum, stratum spinosum, stratum basale, stratum papillare, in einem physiologischen Intervall liegt.

11. Verfahren nach den Ansprüchen 1 bis 10,
**dadurch gekennzeichnet,**
**dass** die aus dem aufgenommenen Volumendatensatz (7) eines Untersuchungs-Fingerabdrucks erstellten parameterzugehörigen Datensätze einer vorgegebenen elektronischen Maske von auf die Einzelparameter (20, 21, 22, 23, 24, 25, 26, 27, 28) bezogenen Datensätze zugeordnet werden, wobei die dem Untersuchungs-Fingerabdruck zugeordnete datensatzgefüllte Maske mit einer Echtheitsparametern entsprechende Vergleichsdatensätze speichernden, vorgegebenen Referenzmaske verglichen wird, wobei die Vergleichsdatensätze den einzelnen gespeicherten Echtheitsparametern (20, 21, 22, 23, 24, 25, 26, 27, 28) entsprechen, wobei die Datensatzfelder der vorgegebenen datensatzzufüllenden Maske mit den Datensatzfeldern der Referenzmaske übereinstimmen.

12. Anordnung (60) zur Prüfung von Fingerabdrücken (2) auf Echtheit mittels optischer Kohärenztomografie umfassend Mittel zur Ausführung des Verfahrens nach den Ansprüchen 1 bis 11, wobei besagte Mittel zumindest umfassen:
- eine Abtasteinheit (4) zur optische Kohärenztomografie, die zumindest einen Real-Fingerabdruck (1) eines Fingers (3) und einen Untersuchungs-Fingerabdruck (2) in Form einer Datensignalfolge (59) erfasst,
- eine Datenerfassungseinheit (7), in der die Datensignalfolge (59) als ein Volumendatensatz ausgebildeter 3D-Datensatz (7) generiert wird,
- eine Auswerteeinheit (5), in die der Volumendatensatz (7) geleitet wird,
- eine Klassifizierungseinheit (6), die zur Auswerteeinheit (5) gehört,
- programmtechnische Mittel in der Auswerteeinheit (5) für die programmtechnische Klassifizierung zwischen Real-Fingerabdruck (1) und Untersuchungs-Fingerabdruck (2),
- eine Zerlegungseinheit (9), die den Volumendatensatz (7) zumindest eines Real-Fingerabdrucks (1) und die den Volumendatensatz (7) des Untersuchungs-Fingerabdruck (2) zumindest in folgende Einzelparameter signaltechnisch separiert, wobei folgende neun Einzelparameter festgelegt sind:
A. Erster Einzelparameter (20): Deckungsgleichheit der Schichten (17, 18) an einer Fingerkuppe,
B. Zweiter Einzelparameter (21): Schichtung der Haut (12),
C. Dritter Einzelparameter (22): Verlauf der Schweißdrüsenkanäle (13,
D. Vierter Einzelparameter (23): Physiologische Größe der Schweißdrüsenkanäle (13),
E. Fünfter Einzelparameter (24): Helixform der Schweißdrüsenkanäle (13),
F. Sechster Einzelparameter (25): Zick-Zack-Muster der Schweißdrüsenkanäle (13) bei Projektion,
G. Siebenter Einzelparameter (26): Winkel *α* des Zick-Zack-Musters (25),
H. Achter Einzelparameter (27): Signalausfall der Schweißdrüsenkanäle (13) zwischen Körnerzellschicht (14) und Stachelzellschicht (15),
I. Neunter Einzelparameter (28): Unterschied der Streuungsintensität (16) der Schichten (17, 18).
wobei in der Klassifizierungseinheit (6) zumindest folgende Funktionseinheiten (30, 31, 32, 33, 34, 35, 36, 37, 38) einer Permanentspeichereinheit (10) und äquivalent dazu Funktionseinheiten (40, 41, 42, 43, 44, 45, 46, 47, 48) einer Temporärspeichereinheit (19) miteinander korrespondierend vorhanden sind:
- analoge Funktionseinheiten (30, 40) für den ersten Einzelparameter (20),
- analoge Funktionseinheiten (31, 41) für den zweiten Einzelparameter (21),
- analoge Funktionseinheiten (32, 42) für den dritten Einzelparameter (22),
- analoge Funktionseinheiten (33, 43) für den vierten Einzelparameter (23),
- analoge Funktionseinheiten (34, 44) für den fünften Einzelparameter (24),
- analoge Funktionseinheiten (35, 45) für den sechsten Einzelparameter (25),
- analoge Funktionseinheiten (36, 46) für den siebenten Einzelparameter (26),
- analoge Funktionseinheiten (37, 47) für den achten Einzelparameter (27),
- analoge Funktionseinheiten (38, 48) für den neunten Einzelparameter (28),
sowie jeweils den analogen Funktionseinheiten zugeordnete Vergleichseinheiten (50, 51, 52, 53, 54, 55, 56, 57, 58),
die zwischen den jeweils analogen Funktionseinheiten (30, 31, 32, 33, 34, 35, 36, 37, 38; 40, 41, 42, 43, 44, 45, 46, 47, 48) gleichen Einzelparameters (20, 21, 22, 23, 24, 25, 26, 27, 28) zum Vergleichen angeordnet sind, wobei die Vergleichseinheiten (50, 51, 52, 53, 54, 55, 56, 57, 58) bei Übereinstimmung des realen Einzelparameters und des temporären Einzelparameters aus jeweils einer analogen Funktionseinheit einen Treffer "1" und bei Nicht-Übereinstimmung keinen Treffer "0" signaltechnisch markieren,
sowie eine Entscheidungslogik (11), die mit allen Vergleichseinheiten (50, 51, 52, 53, 54, 55, 56, 57, 58) in Verbindung steht und die einzelnen Treffer-Ergebnisse "1", "0" übernimmt und tabellarisch zusammenstellt, wobei nur bei einem Ergebnis mit maximaler, der Anzahl der Einzelparameter entsprechender Trefferzahl eine Übereinstimmung gegeben ist und ein Signal zur geprüften Echtheit des Untersuchungs-Fingerabdruckes (2) bereitgestellt wird, und
- eine Ausgabeeinheit (8), die das Ergebnissignal ausgibt.

13. Anordnung nach Anspruch 12,
**dadurch gekennzeichnet,**
**dass** die Abtasteinheit (4) zur optischen Kohärenztomografie ein Fingerbildsensor mit CCD-Kamera ist.

14. Anordnung nach Anspruch 12,
**dadurch gekennzeichnet,**
**dass** die Zerlegungseinheit (9) zur Separierung der Einzelparameter (20, 21, 22, 23, 24, 25, 26, 27, 28) sich in der Auswerteeinheit (5) befindet.

15. Anordnung nach Anspruch 12,
**dadurch gekennzeichnet,**
**dass** die Entscheidungslogik (11) zur Zustandsfestlegung der Echtheit des Untersuchungs-Fingerabdrucks (2) programmtechnische Mittel enthält.

16. Anordnung nach Anspruch 12,
**dadurch gekennzeichnet,**
**dass** programmtechnische Mittel als Ausführende der Verfahrensschritte in der Auswerteeinheit (5) einschließlich der Klassifizierungseinheit (6) gespeichert sind.

## Claims

1. Method for checking fingerprints (2) for authenticity by means of optical coherence tomography, wherein the method comprises at least the following steps:
- scanning real fingerprints (1) using a scanning unit (4) for optical coherence tomography,
- creating three-dimensional images in the form of volume data sets (7),
- breaking-down the volume data sets (7) of the real fingerprints (1) into in each case nine individual parameters in the form of technical electrical signal sequences which are equivalent to individual authenticity parameters,
- permanently storing the volume data sets (7) of the real fingerprints (1), and
- scanning a test fingerprint (2) using the same scanning unit (4),
- creating three-dimensional images in the form of a volume data set (7),
- breaking-down the volume data set (7) of the test fingerprint (2) into in each case a technical electrical signal sequence which is equivalent to the nine individual parameters,
- temporarily storing the volume data set (7) of the test fingerprint (2) in a temporary storage unit (19), wherein the nine individual parameters are:
A. first individual parameter (20) : congruence of outer finger layer (17) and inner finger layer (18),
B. second individual parameter (21): layering of the skin (12),
C. third individual parameter (22) : profile of sweat gland ducts (13),
D. fourth individual parameter (23): physiological size of the sweat gland ducts (13),
E. fifth individual parameter (24): helix shape of the sweat gland ducts (13),
F. sixth individual parameter (25): zigzag pattern of the sweat gland ducts (13) in projection,
G. seventh individual parameter (26): angle α of the zigzag pattern,
H. eighth individual parameter (27): signal failure of the sweat gland ducts (13) between the granular cell layer (14) and the spiny cell layer (15),
I. ninth individual parameter (28) : difference in the scatter intensity (16) of the layers (17, 18),
- comparing the nine individual parameters (20, 21, 22, 23, 24, 25, 26, 27, 28) of the temporarily stored volume data sets (7) of the test fingerprint (2) with all individual parameters (20, 21, 22, 23, 24, 25, 26, 27, 28) of the permanently stored volume data sets (7) of the real fingerprints (1) in comparison units (50, 51, 52, 53, 54, 55, 56, 57, 58) which are assigned to the technical electrical signal sequences which are equivalent to the individual parameters (20, 21, 22, 23, 24, 25, 26, 27, 28) in each case,
- transmitting the comparison result signals from all comparison units (50, 51, 52, 53, 54, 55, 56, 57, 58) to a decision logic system (11) which combines the comparison results,
- outputting the correspondence or the difference between at least one permanently stored real fingerprint (1) and the temporarily stored test fingerprint (2) from the decision logic system (11), wherein
- the correspondence and therefore authenticity are defined if all technical electrical signal sequences, which are equivalent to the individual parameters (20, 21, 22, 23, 24, 25, 26, 27, 28), of the assigned temporary test fingerprint (2) correspond at least to one permanently stored real fingerprint (1) from amongst the permanently stored real fingerprints (1) which is assigned to the individual parameters (20, 21, 22, 23, 24, 25, 26, 27, 28) of the equivalent technical electrical signal sequences, and
- a difference is defined and therefore there is no correspondence if not one of the signal sequences, which are associated with the individual parameters (20, 21, 22, 23, 24, 25, 26, 27, 28), of the permanently stored real fingerprints (1) corresponds to the signal sequences of the individual parameters (20, 21, 22, 23, 24, 25, 26, 27, 28) of the temporary test fingerprint (2).

2. Method according to Claim 1,
**characterized**
**in that** the first individual parameter (20) is defined as congruence of the fingerprints (1, 2), wherein, in the event of a hit, the superficial fingerprint is congruent with the deeper-lying fingerprints between the stratum corneum and the stratum granulosum and also between the dermis and the epidermis.

3. Method according to Claim 1,
**characterized**
**in that** the second individual parameter (21) is defined as layering of the skin (12), wherein the layering relates to the physiological layering of the skin tissue.

4. Method according to Claim 1,
**characterized**
**in that** the third individual parameter (22) is defined as the profile of the sweat gland ducts (13), wherein the sweat gland ducts (13) always connect papillae situated within the tissue, which constitute raised portions of the surface of a fingerprint (1), with the papillae of the outer surface of the fingerprint.

5. Method according to Claim 1,
**characterized**
**in that** the fourth individual parameter (23) is defined as the physiological size of the sweat gland ducts (13) since the sweat gland ducts (13) each have a physiological size in the form of a diameter.

6. Method according to Claim 1,
**characterized**
**in that** the fifth individual parameter (24) is defined as a helix shape of the sweat gland ducts (13) since the shapes of the sweat gland ducts (13) are always helical.

7. Method according to Claim 1,
**characterized**
**in that** the sixth individual parameter (25) is defined as a zigzag pattern of the sweat gland ducts (13) in projection since the sweat gland ducts (13) in projection always result as a zigzag pattern, completely independently of the projection direction, on account of the helix shape.

8. Method according to Claim 1,
**characterized**
**in that** the seventh individual parameter (26) is defined as the angle α of the zigzag pattern (25) since the angle α between the individual teeth of the zigzag pattern lies in a physiological interval.

9. Method according to Claim 1,
**characterized**
**in that** the eighth individual parameter (27) is defined as a signal failure of the sweat gland ducts (13) between the granular cell layer (14) and the spiny cell layer (15) since the sweat gland ducts (13) do not provide a detectable signal of the scanning unit (4) for optical coherence tomography in the region of the stratum granulosum and stratum spinosum and also the dermis.

10. Method according to Claim 1,
**characterized**
**in that** the ninth individual parameter (28) is defined as the difference in the scatter intensity (16) of the layers (17, 18) since the scatter of the tissue of the fingertip comprising stratum corneum, stratum granulosum, stratum spinosum, stratum basale, stratum papillare lies in a physiological interval.

11. Method according to Claims 1 to 10,
**characterized**
**in that** the parameter-related data sets, which are created from the recorded volume data set (7) of a test fingerprint, are assigned to a prespecified electronic mask of data sets which relate to the individual parameters (20, 21, 22, 23, 24, 25, 26, 27, 28), wherein the data set-filled mask, which is assigned to the test fingerprint, is compared with a prespecified reference mask which stores comparison data sets which correspond to authenticity parameters, wherein the comparison data sets correspond to the individual stored authenticity parameters (20, 21, 22, 23, 24, 25, 26, 27, 28), wherein the data set fields of the prespecified data set-filled mask correspond to the data set fields of the reference mask.

12. Arrangement (60) for testing fingerprints (2) for authenticity by means of optical coherence tomography comprising means for executing the method according to Claims 1 to 11, wherein the said means at least comprise:
- a scanning unit (4) for optical coherence tomography, which scanning unit detects at least one real fingerprint (1) of a finger (3) and one test fingerprint (2) in the form of a data signal sequence (59),
- a data detection unit (7) in which the data signal sequence (59) is generated as a 3D data set (7) which forms a volume data set,
- an evaluation unit (5) into which the volume data set (7) is passed,
- a classification unit (6) which belongs to the evaluation unit (5),
- programming means in the evaluation unit (5) for program-related classification between the real fingerprint (1) and the test fingerprint (2),
- a breakdown unit (9) which separates the data volume set (7) of at least one real fingerprint (1) and the volume data set (7) of the test fingerprint (2) in a signal-related manner at least into the following individual parameters, wherein the following nine individual parameters are defined:
A. first individual parameter (20) : congruence of the layers (17, 18) on a fingertip,
B. second individual parameter (21): layering of the skin (12),
C. third individual parameter (22): profile of the sweat gland ducts (13),
D. fourth individual parameter (23): physiological size of the sweat gland ducts (13),
E. fifth individual parameter (24): helix shape of the sweat gland ducts (13),
F. sixth individual parameter (25): zigzag pattern of the sweat gland ducts (13) in projection,
G. seventh individual parameter (26): angle α of the zigzag pattern (25),
H. eighth individual parameter (27): signal failure of the sweat gland ducts (13) between the granular cell layer (14) and the spiny cell layer (15),
I. ninth individual parameter (28) : difference in the scatter intensity (16) of the layers (17, 18),
wherein, in the classification unit (6), at least the following functional units (30, 31, 32, 33, 34, 35, 36, 37, 38) of a permanent memory unit (10) and, equivalent to these, functional units (40, 41, 42, 43, 44, 45, 46, 47, 48) of a temporary storage unit (19) are present in a manner corresponding to one another:
- analogue functional units (30, 40) for the first individual parameter (20),
- analogue functional units (31, 41) for the second individual parameter (21),
- analogue functional units (32, 42) for the third individual parameter (22),
- analogue functional units (33, 43) for the fourth individual parameter (23),
- analogue functional units (34, 44) for the fifth individual parameter (24),
- analogue functional units (35, 45) for the sixth individual parameter (25),
- analogue functional units (36, 46) for the seventh individual parameter (26),
- analogue functional units (37, 47) for the eighth individual parameter (27),
- analogue functional units (38, 48) for the ninth individual parameter (28)
and also in each case comparison units (50, 51, 52, 53, 54, 55, 56, 57, 58) which are assigned to the analogue functional units and
which are arranged between the respectively analogue functional units (30, 31, 32, 33, 34, 35, 36, 37, 38; 40, 41, 42, 43, 44, 45, 46, 47, 48) of the same individual parameter (20, 21, 22, 23, 24, 25, 26, 27, 28) for comparison, wherein the comparison units (50, 51, 52, 53, 54, 55, 56, 57, 58) mark a hit "1" in the event of correspondence of the real individual parameter and the temporary individual parameter from respectively one analogue functional unit and mark no hit "0" in a signal-related manner in the event of non-correspondence,
and also a decision logic system (11) which is connected to all comparison units (50, 51, 52, 53, 54, 55, 56, 57, 58) and takes in the individual hit results "1", "0" and tabulates them,
wherein there is correspondence and a signal for checked authenticity of the test fingerprint (2) is provided only in the event of a result with a maximum number of hits which corresponds to the number of individual parameters, and
- an output unit (8) which outputs the result signal.

13. Arrangement according to Claim 12,
**characterized**
**in that** the scanning unit (4) for optical coherence tomography is a finger image sensor with a CCD camera.

14. Arrangement according to Claim 12,
**characterized**
**in that** the breakdown unit (9) for separating the individual parameters (20, 21, 22, 23, 24, 25, 26, 27, 28) is located in the evaluation unit (5).

15. Arrangement according to Claim 12,
**characterized**
**in that** the decision logic system (11) for state definition of the authenticity of the test fingerprint (2) contains programming means.

16. Arrangement according to Claim 12,
**characterized**
**in that** the programming means are stored as executors of the method steps in the evaluation unit (5) including the classification unit (6).

## Revendications

1. Procédé de contrôle de l'authenticité d'empreintes digitales (2) au moyen de la tomographie en cohérence optique, le procédé comprenant au moins les étapes suivantes :
- balayage d'empreintes digitales réelles (1) au moyen d'une unité de balayage (4) de la tomographie en cohérence optique,
- création de représentations tridimensionnelles sous la forme de jeux de données de volume (7),
- décomposition des jeux de données de volume (7) de l'empreinte digitale réelle (1) respectivement en neuf paramètres individuels sous la forme de séquences de signaux électriques techniquement équivalents à des paramètres en temps réel individuels,
- mémorisation permanente des jeux de données de volume (7) de l'empreinte digitale réelle (1) et
- balayage d'une empreinte digitale d'analyse (2) au moyen de la même unité de balayage (4),
- création de représentations tridimensionnelles sous la forme d'un jeu de données de volume (7),
- décomposition du jeu de données de volume (7) de l'empreinte digitale d'analyse (2) respectivement en une séquence de signaux électriques techniquement équivalents aux neuf paramètres individuels,
- mémorisation temporaire du jeu de données de volume (7) de l'empreinte digitale d'analyse (2) dans une unité de mémoire temporaire (19),
les neuf paramètres individuels étant :
A. premier paramètre individuel (20) : coïncidence de la couche externe du doigt (17) et de la couche interne du doigt (18),
B. deuxième paramètre individuel (21) : stratification de la peau (12),
C. troisième paramètre individuel (22) : tracé des canaux des glandes sudoripares (13),
D. quatrième paramètre individuel (23) : grandeur physiologique des canaux des glandes sudoripares (13),
E. cinquième paramètre individuel (24) : forme hélicoïdale des canaux des glandes sudoripares (13),
F. sixième paramètre individuel (25) : modèle en zigzag des canaux des glandes sudoripares (13) lors d'une projection,
G. septième paramètre individuel (26) : angle α du modèle en zigzag,
H. huitième paramètre individuel (27) : perte de signal des canaux des glandes sudoripares (13) entre la couche granuleuse (14) et le stratum spinosum (15),
I. neuvième paramètre individuel (28) : différence d'intensité de diffusion (16) des couches (17, 18),
- comparaison des neuf paramètres individuels (20, 21, 22, 23, 24, 25, 26, 27, 28) du jeu de données de volume (7) mémorisé temporairement de l'empreinte digitale d'analyse (2) avec tous les paramètres individuels (20, 21, 22, 23, 24, 25, 26, 27, 28) des jeux de données de volume (7) mémorisés de manière permanente de l'empreinte digitale réelle (1) dans des unités de comparaison (50, 51, 52, 53, 54, 55, 56, 57, 58) respectivement associées aux séquences de signaux électriques techniquement équivalents aux paramètres individuels (20, 21, 22, 23, 24, 25, 26, 27, 28),
- communication des signaux de résultat de comparaison issus de toutes les unités de comparaison (50, 51, 52, 53, 54, 55, 56, 57, 58) à une logique de décision (11) qui regroupe les résultats de comparaison,
- délivrance, en sortie de la logique de décision (11), de la concordance ou de la différence entre au moins une empreinte digitale réelle (1) mémorisée de manière permanente et l'empreinte digitale d'analyse (2) mémorisée temporairement,
- la concordance et ainsi l'authenticité étant définies lorsque toutes les séquences de signaux électriques techniquement équivalents aux paramètres individuels (20, 21, 22, 23, 24, 25, 26, 27, 28) de l'empreinte digitale d'analyse (2) temporaire associée correspondent au moins à l'un des paramètres individuels (20, 21, 22, 23, 24, 25, 26, 27, 28) de l'empreinte digitale réelle (1) mémorisée de manière permanente, parmi les empreintes digitales réelles (1) mémorisées de manière permanente, associée aux séquences de signaux électriques techniquement équivalents et
- une différence étant définie et ainsi aucune concordance n'étant présente lorsqu'aucune des séquences de signaux affiliés aux paramètres individuels (20, 21, 22, 23, 24, 25, 26, 27, 28) des empreintes digitales réelles (1) mémorisées de manière permanente ne correspond aux séquences de signaux des paramètres individuels (20, 21, 22, 23, 24, 25, 26, 27, 28) de l'empreinte digitale d'analyse (2) temporaire.

2. Procédé selon la revendication 1, **caractérisé en ce que** le premier paramètre individuel (20) est défini comme une coïncidence des empreintes digitales (1, 2), en cas de réponse positive, l'empreinte digitale en surface étant coïncidente avec les empreintes digitales en profondeur entre la couche cornée et la couche granuleuse ainsi qu'entre le derme et l'épiderme.

3. Procédé selon la revendication 1, **caractérisé en ce que** le deuxième paramètre individuel (21) est défini comme la stratification de la peau (12), la stratification concernant la stratification physiologique du tissu cutané.

4. Procédé selon la revendication 1, **caractérisé en ce que** le troisième paramètre individuel (22) est défini comme le tracé des canaux des glandes sudoripares (13), les canaux des glandes sudoripares (13) reliant toujours les papilles qui se trouvent à l'intérieur du tissu, lesquelles représentent les reliefs de la surface d'une empreinte digitale (1, 2), aux papilles de la surface extérieure de l'empreinte digitale.

5. Procédé selon la revendication 1, **caractérisé en ce que** le quatrième paramètre individuel (23) est défini comme la grandeur physiologique des canaux des glandes sudoripares (13), car les canaux des glandes sudoripares (13) possèdent toujours une grandeur physiologique sous la forme d'un diamètre.

6. Procédé selon la revendication 1, **caractérisé en ce que** le cinquième paramètre individuel (24) est défini comme la forme hélicoïdale des canaux des glandes sudoripares (13), car les formes des canaux des glandes sudoripares (13) sont toujours hélicoïdales.

7. Procédé selon la revendication 1, **caractérisé en ce que** le sixième paramètre individuel (25) est défini comme un modèle en zigzag des canaux des glandes sudoripares (13) lors d'une projection, car les canaux des glandes sudoripares (13) lors d'une projection, du fait de la forme hélicoïdale, produisent toujours un modèle en zigzag, et ce totalement indépendamment de la direction de projection.

8. Procédé selon la revendication 1, **caractérisé en ce que** le septième paramètre individuel (26) est défini comme l'angle α du modèle en zigzag (25), car l'angle α entre les crêtes individuelles du modèle en zigzag se trouve dans un intervalle physiologique.

9. Procédé selon la revendication 1, **caractérisé en ce que** le huitième paramètre individuel (27) est défini comme la perte de signal des canaux des glandes sudoripares (13) entre la couche granuleuse (14) et le stratum spinosum (15), car les canaux des glandes sudoripares (13) ne délivrent aucun signal détectable de l'unité de balayage (4) servant à la tomographie en cohérence optique dans la zone de la couche granuleuse, du stratum spinosum ainsi que du derme.

10. Procédé selon la revendication 1, **caractérisé en ce que** le neuvième paramètre individuel (28) est défini comme la différence d'intensité de diffusion (16) des couches (17, 18), car la diffusion du tissu du bout du doigt, comprenant la couche cornée, la couche granuleuse, le stratum spinosum, le stratum basale, la couche papillaire, se trouve dans un intervalle physiologique.

11. Procédé selon l'une des revendications 1 à 10, **caractérisé en ce que** les jeux de données affiliés aux paramètres créés à partir du jeu de données de volume (7) d'une empreinte digitale d'analyse sont associés à un masque électronique prédéfini de jeux de données rapportés aux paramètres individuels (20, 21, 22, 23, 24, 25, 26, 27, 28), le masque rempli de jeux de données associé à l'empreinte digitale d'analyse étant comparé à un masque de référence prédéfini, qui mémorise les jeux de données de comparaison correspondant aux paramètres en temps réel, les jeux de données de comparaison correspondant aux paramètres en temps réel (20, 21, 22, 23, 24, 25, 26, 27, 28) mémorisés individuels, les champs des jeux de données du masque prédéfini à remplir de jeux de données coïncidant avec les champs des jeux de données du masque de référence.

12. Arrangement (60) de contrôle de l'authenticité d'empreintes digitales (2) au moyen de la tomographie en cohérence optique, comprenant des moyens destinés à mettre en œuvre le procédé selon l'une des revendications 1 à 11, lesdits moyens comprenant au moins :
- une unité de balayage (4) servant à la tomographie en cohérence optique, laquelle acquiert au moins une empreinte digitale réelle (1) d'un doigt (3) et une empreinte digitale d'analyse (2) sous la forme d'une séquence de signaux de données (59),
- une unité d'acquisition de données (7) dans laquelle la séquence de signaux de données (59) est générée sous la forme d'un jeu de données 3D (7) configuré sous la forme d'un jeu de données de volume,
- une unité d'interprétation (5) dans laquelle est acheminé le jeu de données de volume (7),
- une unité de classification (6) qui fait partie de l'unité d'interprétation (5),
- des moyens programmatiques dans l'unité d'interprétation (5) pour la classification programmatique entre l'empreinte digitale réelle (1) et l'empreinte digitale d'analyse (2),
- une unité de décomposition (9) qui sépare signalétiquement le jeu de données de volume (7) d'au moins une empreinte digitale réelle (1) et le jeu de données de volume (7) de l'empreinte digitale d'analyse (2) au moins en les paramètres individuels suivants,
les neuf paramètres individuels suivants étant définis :
A. premier paramètre individuel (20) : coïncidence des couches (17, 18) au niveau d'un bout de doigt,
B. deuxième paramètre individuel (21) : stratification de la peau (12),
C. troisième paramètre individuel (22) : tracé des canaux des glandes sudoripares (13),
D. quatrième paramètre individuel (23) : grandeur physiologique des canaux des glandes sudoripares (13),
E. cinquième paramètre individuel (24) : forme hélicoïdale des canaux des glandes sudoripares (13),
F. sixième paramètre individuel (25) : modèle en zigzag des canaux des glandes sudoripares (13) lors d'une projection,
G. septième paramètre individuel (26) : angle α du modèle en zigzag (25),
H. huitième paramètre individuel (27) : perte de signal des canaux des glandes sudoripares (13) entre la couche granuleuse (14) et le stratum spinosum (15),
I. neuvième paramètre individuel (28) : différence d'intensité de diffusion (16) des couches (17, 18),
au moins les unités fonctionnelles (30, 31, 32, 33, 34, 35, 36, 37, 38) suivantes d'une unité de mémoire permanente (10) et, en équivalence à celles-ci, les unités fonctionnelles (40, 41, 42, 43, 44, 45, 46, 47, 48) d'une unité de mémoire temporaire (19) en correspondance les unes avec les autres étant présentes dans l'unité de classification (6) :
- unités fonctionnelles analogues (30, 40) pour le premier paramètre individuel (20),
- unités fonctionnelles analogues (31, 41) pour le deuxième paramètre individuel (21),
- unités fonctionnelles analogues (32, 42) pour le troisième paramètre individuel (22),
- unités fonctionnelles analogues (33, 43) pour le quatrième paramètre individuel (23),
- unités fonctionnelles analogues (34, 44) pour le cinquième paramètre individuel (24),
- unités fonctionnelles analogues (35, 45) pour le sixième paramètre individuel (25),
- unités fonctionnelles analogues (36, 46) pour le septième paramètre individuel (26),
- unités fonctionnelles analogues (37, 47) pour le huitième paramètre individuel (27),
- unités fonctionnelles analogues (38, 48) pour le neuvième paramètre individuel (28),
ainsi que des unités de comparaison (50, 51, 52, 53, 54, 55, 56, 57, 58) respectivement associées aux unités fonctionnelles analogues,
lesquelles sont disposées entre les unités analogues (30, 31, 32, 33, 34, 35, 36, 37, 38 ; 40, 41, 42, 43, 44, 45, 46, 47, 48) respectives des mêmes paramètres individuels (20, 21, 22, 23, 24, 25, 26, 27, 28) en vue de la comparaison, les unités de comparaison (50, 51, 52, 53, 54, 55, 56, 57, 58) marquant signalétiquement une réponse positive « 1 » en cas de concordance du paramètre individuel réel et du paramètre individuel temporaire respectivement issus d'une unité fonctionnelle analogue et l'absence de réponse positive « 0 » en cas de non concordance,
ainsi qu'une logique de décision (11), qui est reliée à toutes les unités de comparaison (50, 51, 52, 53, 54, 55, 56, 57, 58) et reprend les résultats « 1 », « 0 » des réponses positives individuelles puis les regroupe sous forme de tableau,
une concordance n'étant définie et un signal à propos de l'authenticité contrôlée de l'empreinte digitale d'analyse (2) n'étant fourni que dans le cas d'un résultat avec un nombre de réponses positives maximal qui correspond au nombre de paramètres individuels, et
- une unité de sortie (8) qui délivre le signal de résultat.

13. Arrangement selon la revendication 12, **caractérisé en ce que** l'unité de balayage (4) servant à la tomographie en cohérence optique est un capteur d'empreinte digitale pourvu d'une caméra CCD.

14. Arrangement selon la revendication 12, **caractérisé en ce que** l'unité de décomposition (9) destinée à la séparation des paramètres individuels (20, 21, 22, 23, 24, 25, 26, 27, 28) se trouve dans l'unité d'interprétation (5).

15. Arrangement selon la revendication 12, **caractérisé en ce que** la logique de décision (11) destinée à constater l'état d'authenticité de l'empreinte digitale d'analyse (2) contient des moyens programmatiques.

16. Arrangement selon la revendication 12, **caractérisé en ce que** les moyens programmatiques sont enregistrés dans l'unité d'interprétation (5), y compris dans l'unité de classification (6), en tant qu'exécutants des étapes du procédé.
